(19)

**Europäisches Patentamt**

**European Patent Office**

**Office européen des brevets**

(11) **EP 4 625 753 A1**

(12) **EUROPEAN PATENT APPLICATION**

(43) Date of publication:
01.10.2025 Bulletin 2025/40

(21) Application number: 24167211.2

(22) Date of filing: 28.03.2024

(51) International Patent Classification (IPC):
*H02J 7/00* $^{(2006.01)}$        *H02M 1/00* $^{(2006.01)}$

(52) Cooperative Patent Classification (CPC):
H02J 7/0068; H02J 7/0063; H02M 1/0009;
H02M 1/08; H02M 1/44; H02M 7/483; H02M 7/49;
H02J 2207/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Instagrid GmbH**
**71636 Ludwigsburg (DE)**

(72) Inventor: **Dessecker, Julian**
**Schwaikheim (DE)**

(74) Representative: **Eisenführ Speiser**
**Patentanwälte Rechtsanwälte PartGmbB**
**Postfach 10 60 78**
**28060 Bremen (DE)**

(54)    **SYSTEMS AND METHODS FOR SELECTIVELY SWITCHING ENERGY STORAGE MODULES**

(57)    Systems, methods and software products for operating a controllable output power circuit. The methods comprising: providing a first order for energy storage modules that is associated with a cycle having a duration; controlling operations of the energy storage modules during the cycle in accordance with the first order, wherein at least a first energy storage module is in an energy mode for less than the duration of the cycle; and controlling operations of the energy storage modules during a next cycle in accordance with a second order different than the first order, wherein at least a different second energy storage module is in the energy mode for less than the duration of the next cycle. The energy mode is a mode in which output terminals of a respective energy storage module are indirectly connected to each other via one or more energy storage components.

EP 4 625 753 A1

Example distributing 62.5V to 4 energy modules

Assumption: each Module has a voltage of 25V

| | Cycle C - 3 | Cycle C - 2 | Cycle C - 1 | Cycle C | Cycle C + 1 | Cycle C + 2 | Cycle C + 3 | Cycle C + 4 | Cycle C + 5 | Cycle C + 6 |
|---|---|---|---|---|---|---|---|---|---|---|
| $100_1$ | 100% | 50% | 0% | 100% | | | | | | |
| $100_2$ | 50% | 0% | 100% | 100% | | | | | | |
| $100_3$ | 0% | 100% | 100% | 50% | | | | | | |
| $100_4$ | 100% | 100% | 50% | 0% | | | | | | |
| Vout: | 62.5 | 62.5 | 62.5 | 62.5 | 62.5 | 62.5 | 62.5 | 62.5 | 62.5 | 62.5 |
| Order: | (4123) | (3412) | (2314) | (1234) | (4123) | (3412) | (2341) | (1234) | (4123) | (3412) |

**Energy Storage Module**

800

**FIG. 6**

**Description**

BACKGROUND

Description of the Related Art

Battery cell packs are often used to power electronic devices. Different combinations of the battery cell packs are used to provide different output voltages.

SUMMARY

The present disclosure concerns implementing systems and methods for operating a controllable output power circuit. The methods comprise: providing, by a circuit, a first order for a plurality of energy storage modules that is associated with a cycle of a plurality of cycles having a duration; controlling, by the circuit, operations of the plurality of energy storage modules during the cycle in accordance with the first order, wherein at least a first energy storage module of the plurality of energy storage modules is in an energy mode for only a portion of the duration of the cycle or less than the duration of the cycle or all of the plurality of energy storage modules are in a bypass mode for the duration of the cycle; and controlling, by the circuit, operations of the plurality of energy storage modules during a next cycle of the plurality of cycles in accordance with a second order different than the first order, wherein at least a different second energy storage module of the plurality of energy storage modules is in the energy mode for less than the duration of the next cycle. The energy mode is a mode in which output terminals of a respective energy storage module are indirectly connected to each other via one or more energy cells.

The present disclosure also concerns a controllable output power circuit. The controllable output power circuit comprises: a processor; and/or a non-transitory computer-readable storage medium comprising programming instructions that are configured to cause the processor to implement a method for operating a plurality of energy storage modules. The processor is configured to and/or the programming instructions comprise instructions to: obtain a first order for a plurality of energy storage modules that is associated with a cycle of a plurality of cycles having a duration; control operations of the plurality of energy storage modules during the cycle in accordance with the first order, wherein at least a first energy storage module of the plurality of energy storage modules is in an energy mode for less than the duration of the cycle; and control operations of the plurality of energy storage modules during a next cycle of the plurality of cycles in accordance with a second order different than the first order, wherein at least a different second energy storage module of the plurality of energy storage modules is in the energy mode for less than the duration of the next cycle.

The present disclosure further concerns a controllable output power circuit. The a controllable output power circuit comprises: a plurality of energy storage modules; and a circuit communicatively connected to the plurality of energy storage modules and configured to: obtain a first order for the plurality of energy storage modules that is associated with a cycle of a plurality of cycles having a duration; control operations of the plurality of energy storage modules during the cycle in accordance with the first order, wherein at least a first energy storage module of the plurality of energy storage modules is in an energy mode for less than the duration of the cycle; and control operations of the plurality of energy storage modules during a next cycle of the plurality of cycles in accordance with a second order different than the first order, wherein at least a different second energy storage module of the plurality of energy storage modules is in the energy mode for less than the duration of the next cycle.

The present disclosure concerns an H-bridge inverter circuit. The H-bridge inverter circuit comprises a supply bus, a driver circuit, a voltage regulator, and bootstrap supply capacitors. The supply bus comprises: a high supply line disposed to provide drain voltage to high-side field effect transistors; and a low supply line with a voltage below the high supply line. The H-bridge inverter circuit may also comprise low-side field effect transistors, e.g., with their source terminals being provided source voltage from the low supply line. The driver circuit is configured to drive the field effect transistors. The voltage regulator is configured to power the driver circuit by a drive voltage which is lower than the voltage on the supply line. One of the bootstrap supply capacitors is provided for each high-side field effect transistors. Each bootstrap supply capacitor is configured to store electrical energy which is used to drive the respective high-side field effect transistor. Each bootstrap supply capacitor is chargeable via a respective diode which allows the bootstrap supply capacitor to be charged only when the source voltage of the corresponding field effect transistor is slewing towards the low supply line.

BRIEF DESCRIPTION OF THE DRAWINGS

The present solution will be described with reference to the following drawing figures, in which like numerals represent like items throughout the figures.

FIG. 1A provides a schematic diagram of an example energy storage module, according to some non-limiting embodiments or aspects.

FIG. 1B provides an illustrative block diagram of a circuit in the energy storage module.

FIG. 1C provides a circuit diagram of an energy storage module, according to some non-limiting embodiments or aspects.

FIG. 1D provides a perspective view of an energy storage module.

FIG. 1E provides an illustrative circuit diagram for the transistor active bridge circuit. FIGS. 1A-1E are collectively referred to as "FIG. 1".

FIGS. 2A-2C (collectively referred to as "FIG. 2") are schematic diagrams of an example energy storage module container of energy storage modules, according to some non-limiting embodiments or aspects.

FIGS. 3A and 3B (collectively referred to as "FIG. 3") are schematic diagrams of an example power supply system, according to some non-limiting embodiments or aspects.

FIG. 4 is a circuit diagram of an example power supply system, according to some non-limiting embodiments or aspects.

FIG. 5 provides an illustration that is useful for understanding a novel technique for controlling the energy storage modules in accordance with the present solution.

FIG. 6 provides a graph that is useful for understanding the novel technique of FIG. 7.

FIG. 7 provides a graph showing a control scheme for energy storage modules in which one is in a standby mode.

FIGS. 8-9 each provides a graph showing another control scheme for energy storage modules in which one is in a standby mode.

FIG. 10 provides a flow diagram of a method for controlling a power supply in accordance with the present solution.

FIG. 11 provides a flow diagram of another method for controlling a power supply in accordance with the present solution.

FIG. 12 provides an illustration that is useful for understating right and left shifting of a battery module order.

FIG. 13 provides an illustration that is useful for understanding operations of the present solution for an alternating current output scenario.

FIGS. 14-15 each provides an illustration that is useful for further understanding the present solution.

DETAILED DESCRIPTION

The present solution is described with reference to the attached figures. The figures are not drawn to scale and they are provided merely to illustrate the instant solution. Several aspects of the present solution are described below with reference to example applications for illustration. It should be understood that numerous specific details, relationships, and methods are set forth to provide a full understanding of the present solution. One having ordinary skill in the relevant art, however, will readily recognize that the present solution can be practiced without one or more of the specific details or with other methods. In other instances, well-known structures or operations are not shown in detail to avoid obscuring the present solution. The present solution is not limited by the illustrated ordering of acts or events, as some acts may occur in different orders and/or concurrently with other acts or events. Furthermore, not all illustrated acts or events are required to implement a methodology in accordance with the present solution.

It should also be appreciated that the terminology used herein is for the purpose of describing particular embodiments only and is not intended to be limiting of the present solution. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Further, unless otherwise defined, all terms (including technical and scientific terms) used herein have the same meaning as commonly understood by one of ordinary skill in the art to which this solution belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

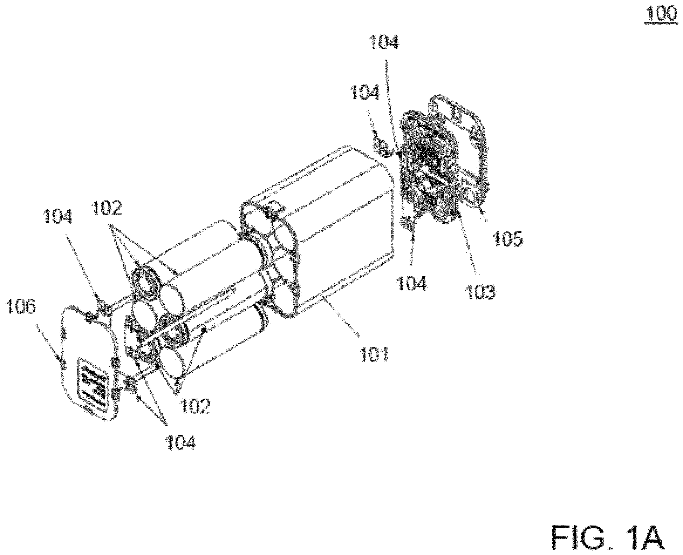

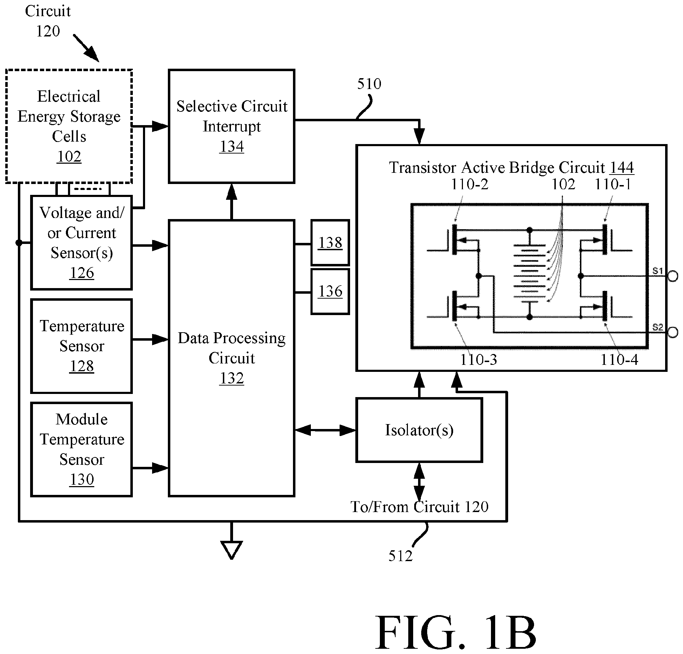

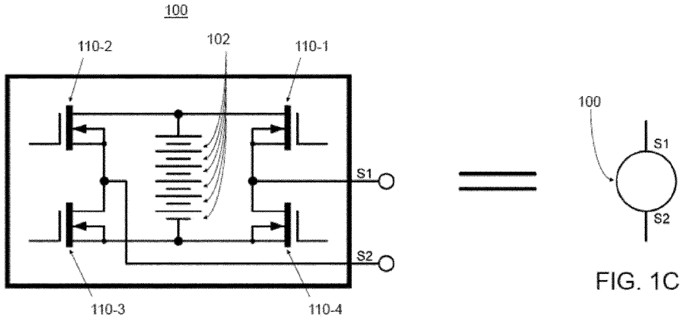

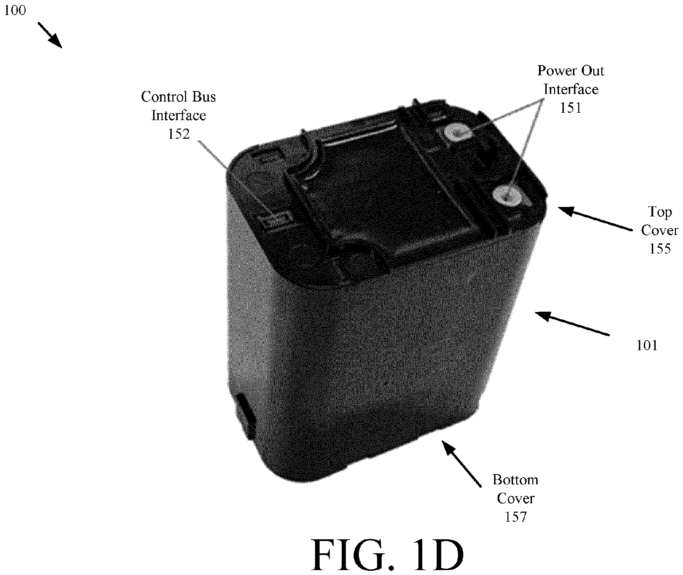

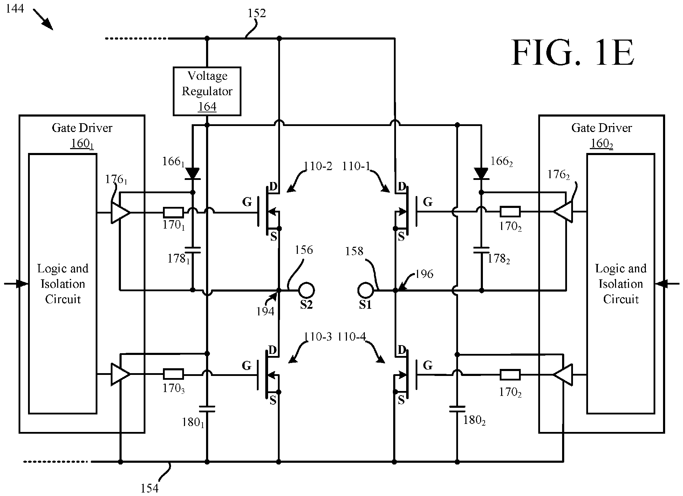

Referring now to FIG. 1A, depicted is a schematic diagram of an example energy storage module **100**, according to some non-limiting embodiments or aspects. As shown in FIG. 1, energy storage module **100** may include housing **101**, at least one energy storage component **102**, module controller **103**, connectors **104**, top cover **105**, and bottom cover **106**. The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100**.

In some non-limiting embodiments or aspects, housing **101** may include plastic, metal, any combination thereof, and/or the like. For example, housing **101** may include a plastic housing.

In some non-limiting embodiments or aspects, housing **101** may be configured to hold at least one (e.g., a plurality of) energy storage components **102**. For example, as shown in FIG. 1, housing **101** may be shaped to have six energy storage components **102** uniformly distributed in an interior space defined by housing **101**.

In some non-limiting embodiments or aspects, each energy storage component **102** may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1, each energy storage component **102** may include a cylindrical cell (e.g., lithium-ion battery cell).

In some non-limiting embodiments or aspects, module controller **103** may include a controller and associated circuitry. Optionally, module controller **103** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments or aspects, connectors **104** may connect the terminals (e.g., ends) of each energy storage component **102** to module controller **103**. Additionally or alternatively, at least one connector **104** may connect at least one terminal (e.g., end) of one energy storage component **102** to another terminal of another energy storage component **102**. For example, connectors **104** may include a conductive (e.g., electrically conductive) material, such as metal and/or the like. In some non-limiting embodiments or aspects, some or all of the connectors **104** may be used for energy storage component **102** (e.g., cell) voltage measurements.

In some non-limiting embodiments or aspects, each of top cover **105** and bottom cover **106** may include plastic, metal, any combination thereof, and/or the like. For example, each of top cover **105** and bottom cover **106** may include a plastic cover. In some non-limiting embodiments or aspects, top cover **105** and bottom cover **106** may be configured to (e.g., sized and shaped to) cover openings at top and bottom ends, respectively, of housing **101**. In some non-limiting embodiments or aspects, top cover **105** may include a first electrical connection (e.g., **S1**, as described herein), a second electrical connection (e.g., **S2**, as described herein), and/or at least one communication connection, as described herein. For example, these connections may allow for electrical and/or communicative connection between module controller **103** and external components (e.g., other components of the power supply system external to the energy storage module housing).

In some non-limiting embodiments or aspects, energy storage module **100** may include a battery module. For example, the battery module may include at least one energy storage component (e.g., a battery cell, such as a rechargeable battery cell). For the purpose of illustration, as shown in FIG. 1A, the battery module may include six energy storage components (e.g., rechargeable battery cells, such as lithium-ion cells, supercapacitors, and/or the like).

In some non-limiting embodiments or aspects, energy storage components **102** (e.g., battery cells) of energy storage module **100** may be connected in series. In some non-limiting embodiments or aspects, energy storage components **102** (e.g., battery cells) of energy storage module **100** may be connected in parallel.

In some non-limiting embodiments or aspects, at least some (e.g., a subset of) energy storage components **102** may be connected in series, for example, so that the combined (e.g., summed and/or the like) voltage of the series-connected components satisfies (e.g., equals, exceeds, and/or the like) the target (e.g., desired) operating voltage of energy storage module **100**. In some non-limiting embodiments or aspects, at least some (e.g., a subset of) energy storage components **102** may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module **100**). For example, energy storage module **100** may include a plurality of subsets of energy storage components **102** such that energy storage components **102** of each subset are connected in series (e.g., to combine to output the desired module voltage), and the subsets may be connected in parallel (e.g., to combine to output the desired module current).

In some non-limiting embodiments or aspects, energy storage module **100** may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, the disclosures of each of which are hereby incorporated by reference in their entireties.

As shown in FIG. 1B, a circuit **120** of the energy storage module **100** comprises voltage and optionally, current sensors **126** connected to the energy storage components **102**. These sensors **126** are configured to measure the voltage and/or current of each energy storage component. Circuit **120** also comprises temperature sensors **128** and a module temperature sensor **130** Each temperature sensor **128** is configured to measure a temperature of one or more energy storage components, while the module temperature sensor **130** is configured to measure an internal temperature of the energy storage module. These sensor measurements are communicated from the sensors **126, 128, 130** to the data processing circuit **132** for processing. The data processing circuit **132** can perform operations to communicate sensor measurements as sensor data to the module controller **103** or an external circuit, and/or perform operations to analyze the sensor measurements to determine if certain criteria is met. For example, if a parameter measurement falls outside of defined range at a given time or for a certain amount of time, then the data processing circuit **132** causes the selective circuit interrupt **134** to transition from a closed state to an open state such that the energy storage module **100** is turned off. The parameter measurement can include a voltage measurement, a current measurement or a temperature measurement.

The data processing circuit **132** may be configured to access datastore(s) **136.** Datastore(s) **136** can comprise computer-readable storage medium on which is stored one or more sets of instructions configured to implement one or more of the methodologies, procedures, or functions described herein. The instructions can also reside, completely or at least partially, within the data processing circuit **132** during execution thereof by the data processing circuit **132.** Datastore(s) **136** and data processing circuit **132** also can constitute machine-readable media. The term "machine-readable media", as used here, refers to a single medium or multiple media (e.g., a centralized or distributed database, and/or associated caches and servers) that store the one or more sets of instructions. The term "machine-readable media", as used here, also refers to any medium that is capable of storing, encoding or carrying a set of instructions for execution by the data processing circuit **132** and that cause the data processing circuit **132** to perform any one or more of the methodologies of the present disclosure. Data processing circuit **132** can include, but is not limited to, processor(s).

Circuit **120** also comprises a transistor active bridge circuit **144.** The transistor active bridge circuit **144** comprises at least one switching element (e.g., first switching element **110-1,** second switching element **110-2,** third switching element **110-3,** and/or fourth switching element **110-4,** collectively referred to as "switching elements **110,"** and individually referred to as "switching element **110**"), first electrical connection **S1,** and second electrical connection **S2.**

In some non-limiting embodiments or aspects, switching elements **110** may be part of (e.g., integrated on, connected to, and/or the like) module controller **103.** In some non-limiting embodiments or aspects, first electrical connection **S1** and/or second electrical connection **S2** may be part of (e.g., integrated on, connected to, and/or the like) module controller **103** and/or may extend through top cover **105.** The number and arrangement of components shown are provided as an example. In some non-limiting embodiments or aspects, energy storage module 100 may include additional components, fewer components, different components, or differently arranged components than those shown. Additionally or alternatively, a set of components (e.g., one or more components) of energy storage module **100** may perform one or more functions described as being performed by another set of components of energy storage module **100.**

As shown in the example in FIG. 1B, energy storage module **100** may include six energy storage components **102** (e.g., rechargeable battery cells and/or the like) connected in series. In some non-limiting embodiments or aspects, energy storage components **102** may be in other arrangements and/or have other connections, as described herein.

In some non-limiting embodiments or aspects, switching elements **110** may be switched (e.g., opened, closed, activated, deactivated, and/or the like) to selectively connect energy storage component(s) **102** to first electrical connection **S1** and/or second electrical connection **S2,** e.g., to control a module voltage across first electrical connection **S1** and second electrical connection **S2.** For example, switching elements **110** may be switched so that (1) first electrical connection **S1** and second electrical connection **S2** are both connected to negative side (e.g., DC minus) of energy storage component(s) **102,** (2) first electrical connection **S1** is connected to the negative side (e.g., DC minus) of energy storage component(s) **102** and second electrical connection **S2** is connected to the positive side (e.g., DC plus) of energy storage component(s) **102,** or (3) first electrical connection **S1** is connected to the positive side (e.g., DC plus) of energy storage component(s) **102** and second electrical connection **S2** is connected to the negative side (e.g., DC minus) of energy storage component(s) **102.** As such, the voltage across first electrical connection **S1** and second electrical connection **S2** may be zero, negative, or positive, respectively.

For the purpose of illustration by way for a few examples, to connect both first electrical connection **S1** and second electrical connection **S2** to the negative side (e.g., DC minus) of energy storage component(s) **102,** fourth switching element **110-4** and third switching element may both be activated (e.g., closed, set to act as a closed switch, and/or the like), while second switching element **110-2** and first switching element **110-1** are deactivated (e.g., open, set to act as an open switch, and/or the like). To connect first electrical connection **S1** to the negative side (e.g., DC minus) and connect second electrical connection **S2** to the positive side (e.g., DC plus) of energy storage component(s) **102,** fourth switching element **110-4** and second switching element **110-2** may be activated, while third switching element **110-3** and first switching element **110-1** are deactivated. To connect first electrical connection S1 to the positive side (e.g., DC plus) and second electrical connection **S2** to the negative side (e.g., DC minus) of energy storage component(s) **102,** first switching element **110-1** and third switching element **110-3** may be activated, and fourth switching element **110-4** and second switching element **110-2** may be deactivated. In some non-limiting embodiments or aspects, the switching elements **110** may be operated to be in states such as: a high-impedance (Hi-Z) state (e.g., in which all of the switching elements **110** are deactivated), a bypass state (e.g., in which the low-side switching elements **110-3** and **110-4** are activated while the high-side switching elements **110-1** and **110-2** are deactivated), and two polarity states (e.g., in which the energy storage component(s) **102** are connected between the first electrical connection **S1** and the second electrical connection **S2** in opposite polarity manner).

In some non-limiting embodiments or aspects, each switching element **110** may include at least one of a transistor (e.g., bipolar transistor, field-effect transistor (FET), metal-oxide-semiconductor field-effect transistor (MOSFET), and/or the like), a switch, a contactor, any combination thereof, and/or the like. In some non-limiting embodiments or aspects, the energy storage module **100** may include one or more driver circuits, such as a gate driver circuit, for driving each switching element **110**. For example, the driver circuits may be part of (e.g., integrated on, connected to, and/or the like) module controller **103**.

In some non-limiting embodiments or aspects, each switching element **110** may be driven, or controlled, via the module controller **103**. For example, module controller **103** may control the switching elements **110** to selectively connect energy storage component(s) **102** to first electrical connection **S1** and/or second electrical connection **S2,** as described herein. For example, module controller **103** may be connected to each switching element **110** in order to drive, or optionally control, such switching element **110**. In some non-limiting embodiments or aspects, the module controller **103** provides signals to the gate driver circuit for driving the switching elements **110**.

As shown in FIG. 1C, each energy storage module 100 may be represented by the symbol shown in FIG. 1C (e.g., for brevity and clarity of the following drawings).

FIG. 1D provides an illustration of an energy storage module **100**. An assembly view of the energy storage module **100** is provided in FIG. 1A. Energy storage module **100** comprises a housing **101** in which energy storage components **102** are housed so as to maintain certain positions relative to each other. The energy storage components **102** can be arranged in two rows of three energy storage components as shown in FIG. 1A. The present solution is not limited in this regard. The energy storage components can have a different arrangement than that shown in FIG. 1A. Any number of energy storage components can be provided in the energy storage module in accordance with a given application. Each energy storage component may include, but is not limited to, a lithium-ion cell. The lithium-ion cell may have a cylindrical shape as shown or another shape (e.g., a rectangular shape) not shown.

A top cover **155** and a bottom cover **157** are provided for the housing **101**. The covers **155, 157** may be configured to provide an environment seal with the housing **101**. The environmental seal may be facilitated by gaskets (not visible or shown in FIG. 1D and/or FIG. 1A) compressed between the covers **155, 157** and the housing's sidewalls.

The safe and reliable operation of the energy storage module **100** requires the constant monitoring of each energy storage component **102,** e.g., to detect when its current (optional), voltage and/or temperature fall outside of defined operating range(s). This monitoring is achieved using a circuit **120** that is also housed in the housing **101**. Conductive terminals **104** are provided to connect the energy storage components **102** to the circuit **120** for at least voltage measurements.

As shown in FIG. 1E, the transistor active bridge circuit **144** comprises gate drivers **160$_1$, 160$_2$,** a voltage regulator **164,** diodes **166$_1$, 166$_2$** (collectively referred to as **"166"**), optional resistors **170$_1$, 170$_2$, 170$_3$, 170$_4$** (collectively referred to as **"170"**), capacitors **178$_1$, 178$_2$, 180$_1$, 180$_2$,** and a transistor active bridge **144**. The transistor active bridge circuit **144** is supplied a voltage waveform from the energy storage components **102**. As such, the transistor active bridge circuit **144** is connected to energy storage components **102** via input lines **152, 154**. Input line **152** may be referred to as a high input line, while input line may be referred to as a low input line **154**. The transistor active bridge circuit **144** is also connected between a pair of output lines **156, 158**. The output lines **156, 158** are connected to the power interface **151** of FIG. 1D.

The transistor active bridge circuit **144** includes a plurality of switches, shown in this example as field-effect transistors (FETs) **110-2, 110-3, 110-1, 110-4** of an N-channel type. Each of the FETs may comprise a metal-oxide semiconductor FET (MOSFET), but other types of switches or FETs (e.g., insulated gate bipolar transistors (IGBTs), bipolar junction transistors (BJTs), gate turn-off thyristors (GTOs) or their likes or combinations) instead of the shown type can also be contemplated. Each FET **110-2, 110-3, 110-1, 110-4** has three (3) terminals respectively defined as a source **S,** a gate **G** and a drain **D**. An electrical path is be provided from the source to the drain of each FET **110-2, 110-3, 110-1, 110-4.** This path is generally referred to herein as the source-drain path. A source-drain path of first FET **110-2** is connected in series with a source-drain path of the second FET **110-3**. The series connected transistor pair **110-2, 110-3** form a first series transistor combination that is connected across the input lines **152, 154**. A source-drain path of the third FET **110-1** is connected in series with a source-drain path of the fourth FET **110-4** to form a second series transistor combination connected across the input lines **152, 154**.

The transistor active bridge circuit **144** can have an output defined by output lines **156, 158**. A first one of the output lines **156** can be connected to the first series combination **110-2/110-3** at an interconnection point **194** between the first and the second field-effect transistors **110-2, 110-3**. A second one of the output lines **158** can be connected to the second series combination **110-1/110-4** at an interconnection point **196** between the third and fourth field-effect transistors **110-1, 110-4**.

Gate driver $160_1$ is provided for driving the gate **G** of each FET **110-2, 110-3**. Similarly, gate driver $160_2$ is provided for driving the gate **G** of each FET **110-1, 110-4**. In this regard, the gate drivers are configured to supply a voltage to the gate **G** of each respective FET at certain times for switching the FET to its "on" state or "off" state. The gate drivers are also configured to stop supplying the voltage to the gate **G** of the FET at certain times for switching the FET to its "on" state or "off" state. Gate driver circuits are well known. Known or to be known gate driver circuit can be used here.

When the gate drivers communicate gate control signals to the FETs, the FETs **110-2, 110-3, 110-1, 110-4** will be biased and switch to their "on" states. In effect, current will flow between the drain **D** and source **S** of these FETs. The FETs transition back to their "off" states when the gate control signals are no longer being output from the gate drivers. The gate drivers are configured to prevent the two FETs in each series pair **110-2/110-3** and **110-1/110-4** from being closed simultaneously or concurrently.

The FETs are switched alternatively by the gate driver to provide a certain power output across lines **156, 158**. For example, when the energy storage module is in its "on" state, one of the high side FETs **110-2, 110-1** is transitioned to its "on" state for a given period of time (e.g., 1 microsecond ($\mu$s) - 15 milliseconds (ms), as some further non-limiting examples, a few microseconds ($\mu$s), 10 $\mu$s, 20 $\mu$s, 50 $\mu$s, 0.1 ms, 2 ms, 5 ms, or even 10 ms). When the energy storage module is in its "off" state, the two high side FETs **110-2, 110-1** are in their "off" states and the two low side FETs **110-3, 110-4** are in their "on" states. In effect, the two low side FETs are conducting while the two high side FETs are not conducting.

The capacitors **178** are provided to store charge for driving the respective FETs **110-2, 110-4**. The respective capacitor **178** is chargeable via their respective diode **166**. In this regard, the supply voltage for the high-side gate driver output stages $176_1$, $176_2$ is stored in capacitors $178_1$, $178_2$. Each of the capacitors $178_1$, $178_2$ is recharged when the corresponding output line **156, 158** is slewing towards the low supply line **154**, e.g., when the corresponding low side FETs **110-3** or **110-4** is switched to the "on" state. For example, when FET **110-3** is turned "on", the potential at output **S2** is pulled towards the potential at source **S** of FET **110-3**. At this time, diode $166_1$ becomes conductive such that current flows from the voltage regulator **164** through capacitor $178_1$ and transistor **110-3** to line **154**. In effect, capacitor $178_1$ is recharged as the current flows therethrough. When the potential at output **S2** is slewing towards the high supply line **152**, the diode $166_1$ acts as a blocking diode such that charge on the capacitor $178_1$ is prevented from flowing back towards the voltage regulator **164**. Thus, charged capacitor $178_1$ supplies voltage is supplied from the capacitor $178_1$ to the high-side gate driver output stage $176_1$ for driving the gate terminal of FET **110-2**. At some point, the capacitor will be discharged to a level which may cause the gate driver $160_1$ to enter an undervoltage mode in which the gate driver is not operational anymore. The capacitor is recharged before it reaches this level of discharge. An advantage of the preset teachings is that switching of the low-side FETs **110-3, 110-4** can be used to simultaneously charge their corresponding capacitor **178** which is used for driving the high-side FETs **110-2, 110-1**.

It is rather common in gate driver circuits to use charge pumps or transformer isolated (e.g., multi-channel) DC-DC converters to facilitate power supply to the gate driver(s). These circuits tend to be relatively expensive. As evident from FIG. 1E, circuit **144** is absent of any charge pumps and therefore is less costly than conventional transistor active bridge circuits. The elimination of the charge pumps was achieved using circuit components **166, 178** to provide the voltage for the high-side gate driver output stages **176** in a controlled manner to avoid or minimize the likelihood that the gate driver $160_1$ enters an undervoltage mode.

Capacitors $180_1$, $180_2$ has a similar role as capacitors $178_1$, $178_2$. However, capacitors $180_1$, $180_2$ are permanently supplied a voltage signal by the voltage regulator **164**. As such, the low-side FETs **110-3, 110-4** can be turned "on" for as long as desired. When low-side FET **110-3** is in its "on" state, the potential at output **S2** is equal to the potential at source **S** of FET **110-3**. Likewise, the potential at output **S1** is equal to the potentiation at source **S** of FET **110-4** when the FET is in its "on" state.

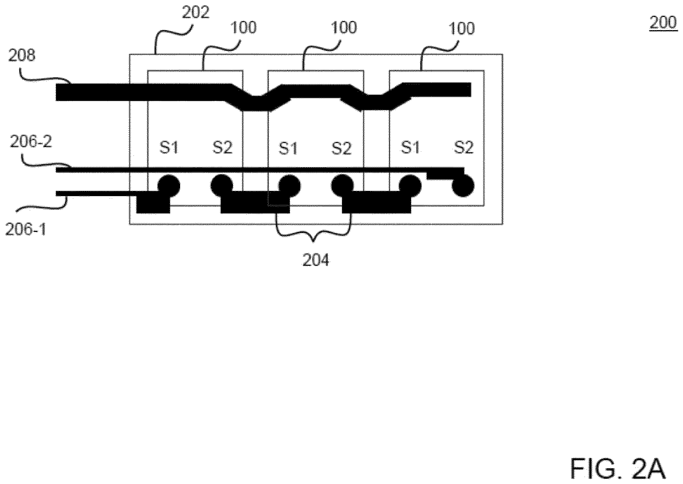

In some non-limiting embodiments or aspects, housing **202** may be configured to hold at least one (e.g., a plurality of, a set of, and/or the like) energy storage modules **100**. For example, as shown in FIG. 2A, housing **202** may be shaped to have three energy storage modules **100** uniformly distributed in an interior space defined by housing **202**. In some non-limiting embodiments or aspects, there may be any number of energy storage modules **100,** as described herein. For example, housing **202** may contain six energy storage modules **100,** nine energy storage modules **100,** twelve energy storage modules **100,** and/or the like.

In some non-limiting embodiments or aspects, bar connections **204** may connect energy storage modules **100** within housing **202.** For example, as shown in FIG. 2A, a first (e.g., left) bar connection **204** may connect second electrical connection **S2** of a first (e.g., left) energy storage module **100** to first electrical connection **S1** of a second (e.g., center) energy storage module **100,** and a second (e.g., right) bar connection **204** may connect second electrical connection **S2** of the second (e.g., center) energy storage module **100** to first electrical connection **S1** of a third (e.g., right) energy storage module **100.** As such, these energy storage modules **100** may be connected in series. In some non-limiting embodiments or aspects, energy storage modules 100 and/or bar connections **204** may be in other arrangements and/or have other connections (e.g., to connect energy storage modules **100** in series, in parallel, a combination of series and parallel connections, and/or the like, as described herein). In some non-limiting embodiments or aspects, bar connections **204** may include a conductive (e.g., electrically conductive) material, such as metal and/or the like.

In some non-limiting embodiments or aspects, electrical connections **206** may include a conductive (e.g., electrically conductive) material, such as metal and/or the like. For example, electrical connections **206** may include a wire, a cable, and/or the like. In some non-limiting embodiments or aspects, electrical connections **206** may allow for electrical connection between energy storage module container **200** (e.g., energy storage modules **100** within energy storage module container **200**) and external components (e.g., other components of the power supply system external to housing **202**).

In some non-limiting embodiments or aspects, first electrical connection **206-1** may be connected to first electrical connection **S1** of at least one energy storage module **100.** For example, first electrical connection **206-1** may be connected to first electrical connection **S1** of a first (e.g., left) energy storage module **100** (e.g., of a group of energy storage modules **100** connected in series). In some non-limiting embodiments or aspects, second electrical connection **206-2** may be connected to second electrical connection **S2** of at least one energy storage module **100.** For example, second electrical connection **206-2** may be connected to second electrical connection **S2** of a last (e.g., right) energy storage module **100** (e.g., of a group of energy storage modules **100** connected in series).

In some non-limiting embodiments or aspects, communication connection **208** may include at least one component that permits communication among other components. For example, communication connection **208** may include a bus connection (e.g., digital bus, such as controller area network bus (CAN-bus), isolated serial port Interface (isoSPI), any derivatives thereof, any combination thereof, and/or the like). In some non-limiting embodiments or aspects, communication connections **208** may allow for communicative connection between container energy storage modules **100** within energy storage module container **200** (e.g., module controllers **103** of such energy storage modules **100**) and external components (e.g., other components of the power supply system external to housing **202,** such as a system controller and/or the like). The system controller may provide a signal (e.g., command) via communication connection **208** to any of module controllers **103** for operating the switching elements **110** thereof (e.g., via one or more gate driver circuits) in a particular (e.g., controlled) manner.

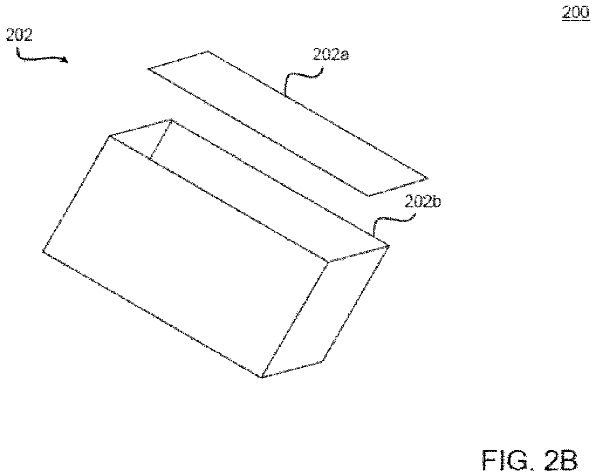

FIGS. 2B-2C provide schematic diagrams of an example energy storage module container 200 of energy storage modules, according to some non-limiting embodiments or aspects. As shown in FIGS. 2A-2C, energy storage module container **200** may include at least one energy storage module **100** (e.g., a plurality or energy storage modules **100,** a set of energy storage modules **100,** and/or the like of), housing **202** (e.g., including top cover **202a** and holder **202b**), bar connections **204,** first electrical connection **206-1** and second electrical connection **206-2** (collectively referred to as "electrical connections **206**" and individually referred to as "electrical connection **206**"), and/or communication connection **208.** The number and arrangement of components shown are provided as an example. In some non-limiting embodiments or aspects, energy storage module container **200** may include additional components, fewer components, different components, or differently arranged components than those shown. Additionally or alternatively, a set of components (e.g., one or more components) of energy storage module container **200** may perform one or more functions described as being performed by another set of components of energy storage module container **200.**

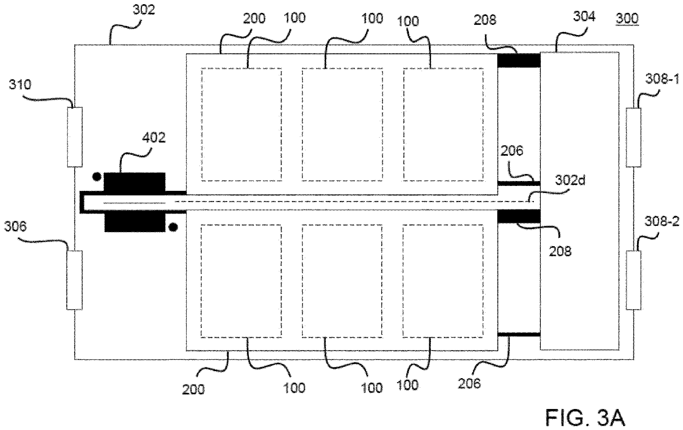

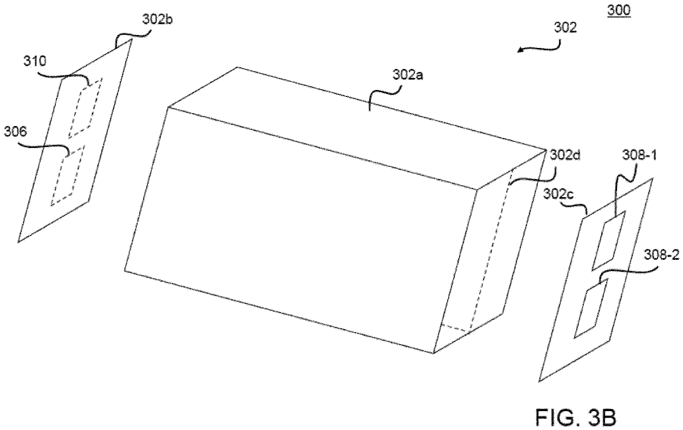

Referring now to FIGS. 3A and 3B, shown are schematic diagrams of an example electrical power system, shown here as a power supply system **300,** according to some non-limiting embodiments or aspects. As shown in FIGS. 3A and 3B, power supply system **300** may include at least one energy storage module container **200** (e.g., each including at least one energy storage module **100**), electrical connections **206,** communication connections **208,** housing **302,** system controller **304,** input connection **306,** at least one output connection (e.g., first output connection **308-1** and/or second output connection **308-2,** collectively referred to as "output connections **308,**" and individually referred to as "output connection **308**"), and/or choke **402.** In some non-limiting embodiments or aspects, power supply system **300** may also include communication connection **310.** For brevity and clarity, electrical connections **206** and communication connections **208** inside energy storage module container **200** are not shown in FIG. 3A, but energy storage module(s) **100** may be connected to electrical connections **206** and/or communication connections **208,** as described herein. For brevity and clarity, connections between energy storage module container **200** (and/or energy storage module(s) **100** thereof) and input connection **306,** output connection(s) **308,** and/or communication connection **310** are not shown in FIG. 3A, but energy storage module container **200** (and/or energy storage module(s) **100** thereof) may be connected to input connection **306,** output connection(s) **308,** and/or communication connection **310,** as described herein. For brevity and clarity, connections between system controller **304** and input connection **306,** output connection(s) **308,** and/or communication connection **310** are not shown in FIG. 3A, but system controller **304** may be connected to input connection **306,** output connection(s) **308,** and/or communication connection **310,** as described herein. The number and arrangement of components shown are provided as an example. In some non-limiting embodiments or aspects, power supply system **300** may include additional components, fewer components, different components, or differently arranged components than those shown. Additionally or alternatively, a set of components (e.g., one or more components) of power supply system **300** may perform one or more functions described as being performed by another set of components of power supply system **300.** For example, in some non-limiting embodiments or aspects, choke **402** may be included in and/or a part of system controller **304.**

In some non-limiting embodiments or aspects, housing **302** may include plastic, metal, any combination thereof, and/or the like. For example, housing **302** may include a metal housing, such as an aluminum housing.

In some non-limiting embodiments or aspects, housing **302** may be configured to hold at least one (e.g., a plurality of) energy storage container(s) **200** and/or at least one (e.g., a plurality of) energy storage modules(s) **100.** For example, housing **302** may be configured to hold two energy storage containers **200,** three energy storage containers **200,** four energy storage containers **200,** and/or the like. For the purpose of illustration, housing **302** may be configured to hold two energy storage containers **200,** each of which may hold twelve energy storage modules(s) **100** (e.g., a total of 24 energy storage modules(s) **100**). For the purpose of illustration, housing **302** may be configured to hold three energy storage containers **200,** each of which may hold eight energy storage modules(s) **100** (e.g., a total of 24 energy storage modules(s) **100**). Other non-limiting configurations are also possible, e.g., housing **302** may hold four energy storage containers **200,** each of which may hold six energy storage modules(s) **100** (e.g., a total of 24 energy storage module(s) **100**). For the purpose of illustration, housing **302** may be configured to hold two energy storage containers **200,** each of which may hold three energy storage modules(s) **100** (e.g., a total of 6 energy storage modules(s) **100**). In some non-limiting embodiments or aspects, energy storage container(s) **200** and/or energy storage module(s) **100** may be in other arrangements within housing **302.**

In some non-limiting embodiments or aspects, housing **302** may include a plurality of compartments separated by dividers **302d** (e.g., walls, barriers, and/or the like). For example, the number of compartments may be equal to the number of energy storage container(s) **200** (e.g., a respective compartment for each respective energy storage container **200**). Each compartment may be separated from the adjacent compartment(s) by a divider **302d.** For example, one divider **302d** may separate an interior space of housing **302** into two compartments, two dividers **302d** may separate an interior space of housing **302** into three compartments, and so on. In some non-limiting embodiments or aspects, divider **302d** may be part of housing **302** and/or may include the same material as housing **302** (e.g., aluminum, metal, plastic, and/or the like).

In some non-limiting embodiments or aspects, as shown in FIG. 3B, housing **302** may include body **302a,** first end cap **302b,** second end cap **302c,** and/or at least one divider **302d.** In some non-limiting embodiments or aspects, body **302a** and/or divider **302d** may include a first material (e.g., metal, such as aluminum), and first end cap **302b** and/or second end cap **302c** may include a second material (e.g., plastic). In some non-limiting embodiments or aspects, at least one of first end cap **302b** and/or second end cap **302c** may include the same material as body **302a** and/or divider **302d.** In some non-limiting embodiments or aspects, first end cap **302b** and second end cap **302c** may be configured to (e.g., sized and shaped to) cover openings at respective ends of body **302a.**

In some non-limiting embodiments or aspects, first end cap **302b** and/or second end cap **302c** may include (and/or may have a space to accommodate) input connection **306,** output connection(s) **308,** and/or communication connection **310.** For the purpose of illustration, as shown in FIG. 3B, input connection **306** and communication connection **310** may be located at first end cap **302b,** and output connections **308** may be located at second end cap **302c.** In some non-limiting embodiments or aspects, input connection **306,** output connection(s) **308,** and/or communication connection **310** may be in other arrangements. For example, all of input connection **306,** output connection(s) **308,** and communication connection **310** may be located at the same end cap (e.g., one of first end cap **302b** or second end cap **302c**). As another example, input connection **306** may be located at one end cap, and communication connection **310** and output connection(s) **308** may be located at the other end cap. As another example, input connection **306** and output connection(s) **308** may be located at one end cap, and communication connection **310** may be located at the other end cap. As another example, first output connection **308-1** may be located at one end cap, and second output connection **308-2** may be located at the other end cap.

In some non-limiting embodiments or aspects, system controller **304** may include a controller and associated circuitry. For example, system controller **304** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, system controller **304** may be communicatively connected to energy storage module container **200** and/or energy storage module(s) **100** (e.g., module controller(s) **103** thereof) by communication connection **208.** In some non-limiting embodiments or aspects, system controller **304** may be electrically connected to energy storage module container **200** and/or energy storage module(s) **100** (e.g., energy storage component(s) **102** thereof) by electrical connection(s) **206.** In some non-limiting embodiments or aspects, choke **402** may be included in and/or a part of system controller **304.**

In some non-limiting embodiments or aspects, input connection **306** may include at least one connector (e.g., at least one standardized electrical plug connector, e.g., for mains electric power and/or electrical devices compatible therewith). In some non-limiting embodiments or aspects, each output connection **308** may include at least one connector (e.g., at least one standardized electrical plug connector, e.g., for mains electric power and/or electrical devices compatible therewith). For example, first output connection **308-1** may include a connector (e.g., standardized electrical plug connector) suitable for 100-127 V (e.g., at a frequency of 60 Hz suitable for the United States of America, North America, etc.). For example, second output connection **308-2** may include a connector (e.g., standardized electrical plug connector) suitable for 200-240 V (e.g., at a frequency of 50 Hz suitable for the European Union, etc.). In some non-limiting embodiments or aspects, communication connection **310** may include at least one connector (e.g., at least one standardized communication plug connector). For example, communication connection **310** may include at least one of a universal serial bus (USB) connector (e.g., USB-A, USB-B, USB-C, USB power delivery (USB-PD), mini-USB, micro-USB, and/or the like), an ethernet connector, a coaxial cable connector, a pin connector, a CAN-bus connector, any combination thereof, and/or the like.

In some non-limiting embodiments or aspects, choke **402** may be electrically connected (e.g., coupled and/or the like) to energy storage module container(s) **200** and/or energy storage module(s) **100,** as described herein. For example, a first energy storage module container **200** and/or a first set of energy storage modules **100** may be connected to a first connection (e.g., first end, first winding, and/or the like) of choke 402, as described herein. Additionally or alternatively, a second energy storage module container **200** and/or a second set of energy storage modules **100** may be connected to a second connection (e.g., second end, second winding, and/or the like) of choke **402,** as described herein.

In some non-limiting embodiments or aspects, system controller **304** may command module controller(s) **103** of energy storage module(s) **100** to generate an output voltage based on a combination (e.g., sum and/or the like) of the respective module voltage of each respective energy storage module **100,** as described herein. For example, by sequentially connecting multiple energy storage module(s) **100** in series in a time-shifted manner, a combined (e.g., summed) voltage may approximate an AC voltage waveform having a target amplitude (e.g., a voltage substantially equal to the nominal voltage of mains electric power, such as 100-127 V, 200-240 V, an/dor the like) and/or a target frequency (e.g., a frequency substantially equal to the nominal frequency of mains electric power, such as 60 Hz, 50 Hz, and/or the like), as described herein.

In some non-limiting embodiments or aspects, system controller **304** may command module controller(s) **103** of energy storage module(s) **100** to cause a respective duty cycle of a respective module voltage of each respective energy storage module **100** to generate an output voltage based on a combination (e.g., sum and/or the like) of the respective module voltage of each respective energy storage module **100,** as described herein. For example, by modulating the duty cycle differently for multiple energy storage module(s) **100** connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation (PWM) type waveform. For example, system controller **304** may command module controller(s) **103** of energy storage modules **100** to switch their output voltage with certain frequency and/or duty-cycle. The exact number or range of the switching frequency is not essential to the scope or generality of the teachings of the present disclosure. As some non-limiting examples, the switching frequency of the system may be in the kHz range (1 kHz to 999 kHz). For example, the switching frequency and/or PWM frequency of the system may be between 40 kHz and 100 kHz. In some cases, the switching frequency and/or PWM frequency of the system may be at or around 90 kHz. In some non-limiting embodiments or aspects, module output may be switching (e.g., PWM) at a frequency between 1.5 kHz to 7.5 kHz. For example, module output may be switching (e.g., PWM) at a frequency between 3.5 kHz to 4.5 kHz. As a further example, module output may be switching (e.g., PWM) at a frequency at or around 3.75 kHz. As another example, module output may be switching (e.g., PWM) at a frequency at or around 4 kHz. In some non-limiting embodiments or aspects, the switching frequency or PWM frequency of the system may be proportional to a multiplication of the switching frequency and/or PWM frequency of the energy storage module **100** and the number of energy storage modules **100.** It shall be appreciated that duty cycle may be anywhere between 0% and 100%, e.g., depending on the time at which the respective energy storage modules **100** are being operated. For example, 0% duty cycle for a given energy storage module **100** may mean that the energy storage module **100** is instructed to be deactivated or in a bypass mode (energy storage module **100** not contributing to the output voltage, but still able to carry current), and 100% duty cycle may mean that that energy storage module **100** is instructed to be switched on or activated in a given polarity. For example, by sweeping the duty cycle of a given energy storage module **100** over time (e.g., between 0% and 100%), the effective output voltage of that energy storage module **100** can be more finely incremented or decremented between voltage steps associated with full switching between two consecutive energy storage modules **100.** Various energy storage modules **100** may be orchestrated, e.g., by system controller **304,** to generate an output voltage based on a combination of the respective module voltage of each respective energy storage module **100,** as described herein.

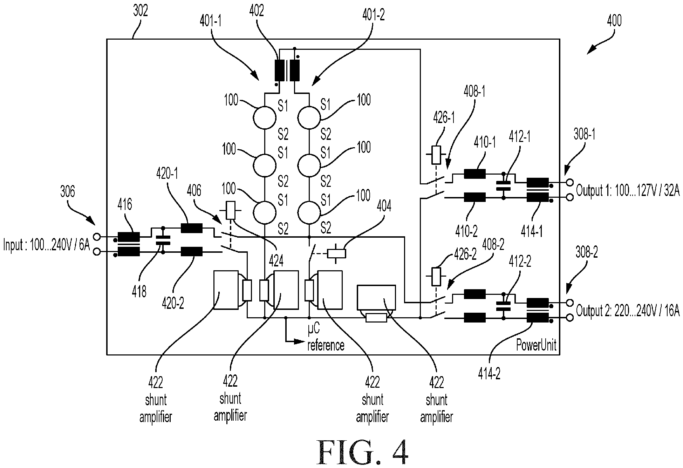

Referring now to FIG. 4, shown is a circuit diagram of an example power supply system **400,** according to some non-limiting embodiments or aspects. In some non-limiting embodiments or aspects, power supply system **400** may be the same as or similar to power supply system **300.** The number and arrangement of components shown are provided as an example. In some non-limiting embodiments or aspects, power supply system **400** may include additional components, fewer components, different components, or differently arranged components than those shown. Additionally or alternatively, a set of components (e.g., one or more components) of power supply system **400** may perform one or more functions described as being performed by another set of components of power supply system **400.**

In some non-limiting embodiments or aspects, as shown in FIG. 4, input connection **306** may be connected to input choke **416.** Input choke **416** may be connected to input capacitor **418** and/or at least one input inductor (e.g., first input inductor **420-1** and/or second input inductor **420-2,** collectively referred to as "input inductors **420,"** and individually referred to as "input inductor **420**"). For example, input choke **416** may be provided for electromagnetic compatibility (EMC) reasons. Similarly, input capacitor **418** may be provided as an EMC capacitor (and/or class-X capacitor), which may stabilize the input voltage and/or make the input less impedant at higher frequencies. For example, input inductor(s) **420** may be used to operate the electrical system **400** in a controlled current mode.

In some non-limiting embodiments or aspects, first output connection **308-1** may be connected to first output choke **414-1.** First output choke **414-1** may be connected to at least one of capacitor **412-1** and/or inductors **410.**

In some non-limiting embodiments or aspects, second output connection **308-2** may be connected to second output choke **414-2.** Second output choke **414-2** may be connected to capacitor **412-2.**

In some non-limiting embodiments or aspects, each of the chokes (e.g., input choke 416, first output choke **414-1,** and/or second output choke **414-2**) may be common-mode chokes and/or the like, e.g., used for EMC performance. It shall be appreciated that further discussion of EMC inductors or capacitors is not essential to the scope or generality of the present teachings.

In some non-limiting embodiments or aspects, input switch **424** may selectively connect and/or disconnect input **406** from first set **401-1** and second set **401-2** of energy storage modules **100.** In some non-limiting embodiments or aspects, to operate in a third mode of operation (e.g., a charging mode of operation) input switch **424** at input **406** may be switched to a first state (e.g., closed, activated, and/or the like). For example, switching input switch **424** to the first state (e.g., closed, activated, and/or the like) may allow current to flow from input connection **306** through input **406** to first set **401-1** and second set **401-2** of energy storage modules **100** (e.g., to charge energy storage modules **100**). In some non-limiting embodiments or aspects, a power source (e.g., mains electric power, generator power, renewable power (e.g., solar, wind, and/or the like), and/or the like) may be connected to input connection **306.** In some non-limiting embodiments or aspects, system controller **300** may control module controllers of energy storage modules **100** to charge energy storage components **102** thereof (e.g., based on power from the power source).

In some non-limiting embodiments or aspects, to discontinue the third mode of operation (e.g., stop charging) and/or to prevent current from flowing to input connection **306** when power supply system **400** is not in the third (e.g., charging) mode of operation, input switch **424** at input **406** may be switched to a second state (e.g., open, deactivated, and/or the like).

In some non-limiting embodiments or aspects, at least one output switching element (e.g., first output switch **426-1** and/or second output switch **426-1,** collectively referred to as "output switches **426,"** and individually referred to as "output switch **426**") may selectively connect and/or disconnect outputs **408** from first set **401-1** and second set **401-2** of energy storage modules **100.**

In some non-limiting embodiments or aspects, to operate in the first mode of operation, in addition to switching of switch **404** to a first state (e.g., closed, activated and/or the like), first output switch **426-1** may be switched to a first state (e.g., closed, activated and/or the like). For example, this may allow current to flow from first set **401-1** and second set **401-2** of energy storage modules **100** through first output **408-1** (and inductors **410** and/or capacitor **412-1**) to first output connection **308-1** (e.g., to supply power to a load connected to first output connection **308-1**). In some non-limiting embodiments or aspects, to prevent current from flowing to first output connection **308-1** when power supply system **400** is not in the first mode of operation, first output switch **426-1** may be switched to a second state (e.g., opened, deactivated and/or the like).

In some non-limiting embodiments or aspects, to operate in the second mode of operation, in addition to switching of switch **404** to a second state (e.g., opened, deactivated and/or the like), second output switch **426-2** may be switched to a first state (e.g., closed, activated and/or the like). For example, this may allow current to flow from first set **401-1** and second set **401-2** of energy storage modules **100** through second output **408-2** (and capacitor **412-2**) to second output connection **308-2** (e.g., to supply power to a load connected to second output connection **308-2**). In some non-limiting embodiments or aspects, to prevent current from flowing to second output connection **308-2** when power supply system **400** is not in the second mode of operation, second output switch **426-2** may be switched to a second state (e.g., opened, deactivated and/or the like).

In some non-limiting embodiments, the first mode of operation and the second mode of operation may be used to provide multi-voltage operation via the power supply system **400.** For example, in the first mode of operation, the first set **401-1** and second set **401-2** of energy storage modules **100** may be connected in parallel, while in the second mode of operation, the first set **401-1** and second set **401-2** of energy storage modules **100** may be connected in series. It shall be appreciated that the first mode of operation may be provide an output voltage which is lower than the output voltage provided in the second mode of operation, however the output current provided in the first mode of operation may be larger than the output current provided in the second mode of operation. For example, the first mode of operation may provide an 110 V output, while the second mode of operation provides a 220 V output. This can advantageously allow the power supply system **400** for multi-voltage domain operation. For example, 110 VAC mains voltage domain is predominantly used in the US, while 220 VAC mains voltage domain is used in Europe. The power supply system **400** can thus allow flexibility in using electrical appliances rated for any of the voltage domains. A particular advantage of the shown configuration can be that output power can be similar or identical in either mode. For example, assuming identical sets (**401-1** and **401-2**) operating identically, output current in the first mode can be double of the output current in the second mode even though the output voltage in the first mode is half of the output voltage in the second mode. This can allow similar power levels to be used despite the voltage domain which the power supply system **400** output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the power supply system **400**.

In some non-limiting embodiments or aspects, each of input switch **424** and output switches **426** may include at least one of a switch, a contactor, a transistor, any combination thereof, and/or the like. For example, each of input switch **424** and output switches **426** may include at least one of an SPST switch, a DPDT switch, an SPDT switch, a DPST switch, any combination thereof, and/or the like. For example, each of input switch **424** and output switches **426** may include at least one of a DPDT switch or a DPST switch. For the purpose of illustration, as shown in FIG. 4, each of input switch **424** and output switches **426** may include a DPST switch or a DPDT switch.

In some non-limiting embodiments or aspects, power supply system **400** may include current sensors **422**, which may be in communication with system controller **304** (e.g., a microcontroller). In some non-limiting embodiments or aspects, each current sensor **422** may include a shunt amplifier. For example, each shunt amplifier may refer to a common potential (e.g., reference voltage), to which system controller **304** (e.g., a microcontroller) also may refer. In some non-limiting embodiments or aspects, at least some (e.g., all, a subset, and/or the like) of current sensors **422** may be any other suitable type of current sensor. For example, a current sensor **422** may include measuring voltage drop across a resistor connected in series (e.g., to at least one of first set **401-1** and/or second set **401-2** of energy storage modules **100**), e.g., to measure the current flowing through the resistor (and/or any component in series with the resistor). In some non-limiting embodiments or aspects, at least one current sensor **422** may be of a different type than another current sensor **422**. For example, a current sensor **422** connected to of first set **401-1** of energy storage modules **100** may be of a different type than another current sensor **422** connected to second set **401-2** of energy storage modules **100**.

In some non-limiting embodiments or aspects, by measuring current at locations of current sensors **422**, the following may be measured (e.g., by system controller **304** and/or the like): output current (e.g., in a redundant manner), input current (e.g., in a redundant manner), circular current (e.g., if strings are connected in parallel). In some non-limiting embodiments or aspects, current sensors may measure current flowing through each of first set **401-1** and second set **401-2** of energy storage modules **100**. As such, relative measurements may be performed to detect if a circular (e.g., loop) current is flowing between first set **401-1** and second set **401-2** of energy storage modules **100**. In other words, such relative measurements may be used to detect that the load current is divided evenly between the sets. Such measurements also may be used for orchestrating the operation of energy storage modules **100**, e.g., in such a manner that the circular (e.g., loop) current may be reduced (e.g., eliminated). Additionally or alternatively, such orchestration may also include disabling certain energy storage modules **100** in any of sets **401**, even if such disabling causes an unequal number of active energy storage modules **100** between the sets **401**. This may help running the system **400**, for example, even if energy storage modules **100** between sets **401** have different charge levels. Additionally or alternatively, such orchestration may include first module voltages of first set **401-1** being interleaved with second module voltages of second set **401-2**. Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set **401-1** and the second set **401-2**. This may result in the loop current which tends to flow from one set **401** to the other set **401** to be a low frequency current which can be used, e.g., to equalize state of charge between the two sets **401**. Choke **402**, even in such non-limiting embodiments or aspects, may block the high frequency currents, but may allow low frequency or DC current to flow from the set **401** having a higher voltage than the other set **401**. As such, power supply system **400** may be more robust, flexible, and balanced. In some non-limiting embodiments or aspects, current sensors **422** may be leveraged for making absolute measurements, such as determining total current flowing through first set **401-1** and/or second set **401-2** of energy storage modules **100**. It shall be appreciated that said imbalance may be caused by unequal number of energy storage modules **100** operating in one set **401** as compared to the number of energy storage modules **100** operating in the other set **401**. Additionally or alternatively, the imbalance may be due to unequal charge level between the two sets **401.** Similarly, the power supply system **400** may also include circuit for voltage measurement in one or more networks of the power supply system **400.** It is neither essential nor limiting to the present disclosure to specify which voltage measurement circuit or scheme must be used.

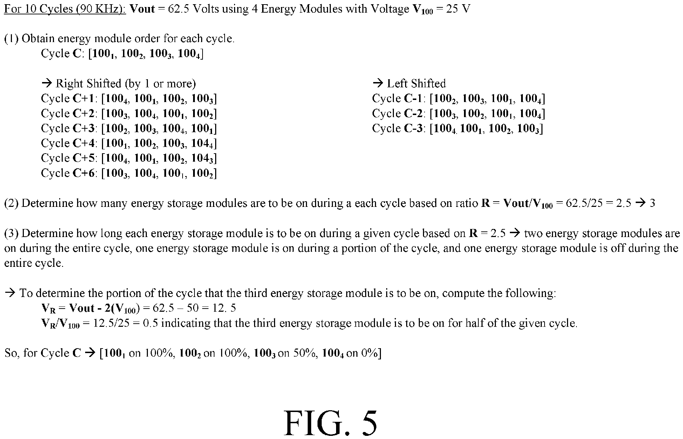

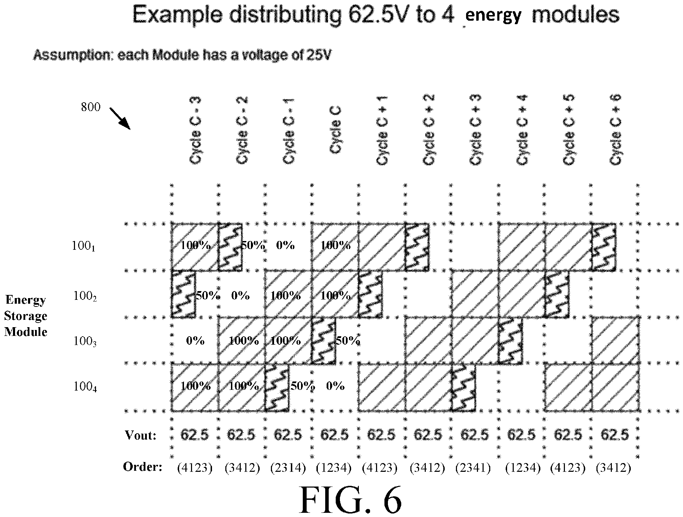

Referring now to FIG. 5, there is provided an illustration that is useful for understanding a novel technique for controlling the energy storage modules **100** in accordance with the present solution. In FIG. 5, an assumption is made that each energy storage module has a same voltage associated therewith. However, it should be noted that this may not be the actually the case, i.e., a scenario in which an assumption cannot be made that all energy storage modules have the same associated voltage. The algorithm will be discussed in more detail in relation to FIG. 6 in which such an assumption is not made.

The technique generally involves performing the following operations for each cycle: (1) obtaining an energy module order for each cycle **of N** cycles; (2) determining how many energy storage modules are to be on during each cycle of the **N** cycles; and (3) determine how long each energy storage modules is to be on during each cycle of the **N** cycles. **N** can be any integer greater than or equal to one. Operations (1)-(3) will now be described in relation to a first scenario in which the energy module voltage is the same for all energy storage modules. Another second scenario in which the energy module voltage is different for each energy storage module will be discussed below.

In the first scenario, **N** may be ten and each cycle may have a given duration. The duration can include, but is not limited to, 90 kHz. The output voltage **Vout** of the power supply (e.g., power supply system **300** of FIG. 3 or **400** of FIG. 4) may be, for example, 62.5 Volts. Energy storage modules **100** may be selected to provide the 62.5 Volt output. The output voltage of an energy storage module is referred to as $V_{100}$. Output voltage $V_{100}$ may include, but is not limited to, 25 Volts. The output voltage $V_{100}$ may can be obtained via a look-up table (LUT) operation. One or more look-up tables (LUTs) can be stored in a datastore of the power supply.

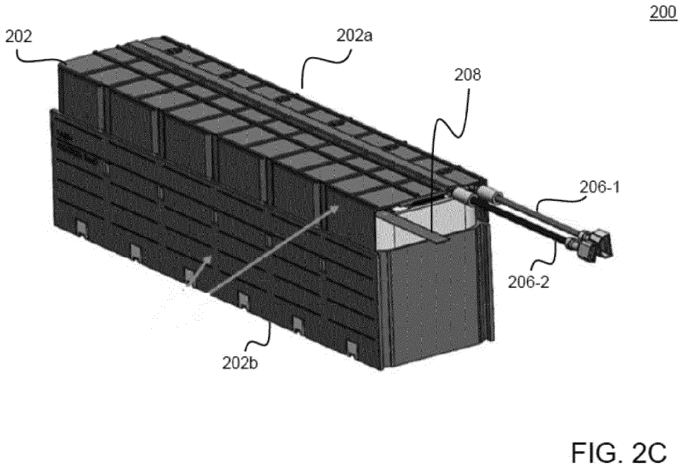

With regard to operation (1), the energy module order for cycle **C** may be prespecified as [$100_1$, $100_2$, $100_3$, $100_4$]. The energy module order is changed per cycle so that the capacitors $178_1$, $178_2$ of each energy storage module are periodically re-charged to avoid the gate drivers (e.g., gate driver(s) $160_1$, $160_2$ of FIG. 6) from entering an undervoltage state. In this regard, the energy storage modules should be transitioned to their bypass mode at a given frequency. The frequency is selected to avoid or minimize the chance that the gate drivers enter the undervoltage state. The energy module order can be changed in accordance with a shifting scheme, a random or pseudo-random scheme, or a criteria-based scheme. The battery order for each cycle can be obtained via LUT operation(s) that access LUT(s) stored in the datastore (e.g., datastore **296** of FIG. 2) of the power supply.

In a shifting scheme scenario, the order for a next cycle **C+1** is determined by shifting the energy module order to the right or left by one or more energy storage modules. A right shift causes the last energy storage module in the order to be moved to the front of the next order. A left shift causes the first energy storage module in the order to be moves the back of the next order. This type of shifting operation, e.g., barrel shifting, may be implemented in hardware and/or software form.

For example, as shown in FIG. 5, the energy module order may be shifted by one to the right for next cycles and shifted by one to the left for previous cycles. As such, the energy storage module order for a next cycle **C+1** is [$100_4$, $100_1$, $100_2$, $100_3$], and so on. The energy storage module order for a previous cycle **C-1** is [$100_2$, $100_3$, $100_1$, $100_4$], and so on. The present solution is not limited to the particulars of this example. Alternatively, the energy module order may be shifted by any number to the left for next cycles and shifted to any number to the right for previous cycles.

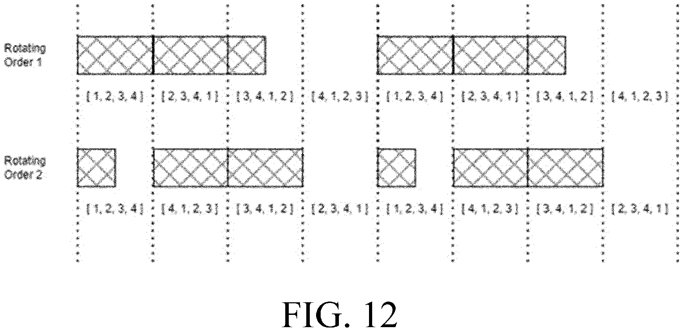

It should be noted that the different switching results are obtained based on the shifting direction. Depending on the order of the energy module rotation, the number of switching operations per energy module changes. A goal may be to minimize the number of switching operations per energy storage module for two reasons: more switching causes a higher thermal load; and more switching creates more voltage transients which are undesirable. It would also be possible to do a random permutation of the switching order but at a high number of energy storage modules this would cause a lot more of switching operations. An illustration is provided in FIG. 12 that illustrations the switching difference for right and left shifting of a battery module order.

In the criteria-based scheme scenario, the energy module order is changed per cycle based on certain criteria. This criteria can include, but is not limited to, a predicted state of charge of a capacitor (e.g., capacitor $178_1$ or $178_2$ of FIG. 1E), a duration of charge for the capacitor, a predicted time that the capacitor's charge level falls below threshold, a last time of charge for the capacitor, a last time that an energy storage module was "on" an entire cycle, and/or a frequency that each energy storage module should be transitioned to their bypass mode to avoid or minimize the chance that the gate drivers enter the undervoltage state. The threshold can include, but is not limited to, five volts.

Alternatively, the battery order for each cycle can be dynamically determined by the controller based on the current state of charge of each bootstrap capacitor (e.g., capacitor $178_1$ or $178_2$ of FIG. 1E). The current state of charge could be measured by sensor(s) (e.g., sensors **138** of FIG. 1B), computed or predicted using a trained machine learning model. The current state of charge may be computed using a total number of previous cycles that a respective energy storage module was "on" over a specified window. The specified window can be defined by a preselected number of cycles. For example, the specified window is equal to five cycles. The present solution is not limited in this regard.

Operation (2) involves determining how many energy storage modules are to be on during each cycle. It should be noted that, in all scenarios, at least one energy storage module will not be "on" (or in its energy mode) during the entire duration of each cycle. This feature of the present solution assures that the gate driver related capacitors (e.g., capacitors **178** of FIG. 1E) in each energy storage module are periodically recharged.

The determination of operation (2) can be made based on a ratio **R** of the power supply's output voltage **Vout** and the energy module voltage $V_{100}$. The ratio **R** can be defined by the following mathematical equation (1).

$$\mathbf{R} = \mathbf{Vout}/\ \mathbf{V_{100}} \hspace{4cm} (1)$$

In FIG. 5, the ratio **R** = 62.5/25 = 2.5 which is rounded to three. So, three energy storage modules are needed to provide the output voltage **Vout** of 62.5 Volts.

Operation (3) involves determining how long each energy storage module is to be on during each cycle based on the ratio **R.** Each energy storage module can be "on" during the entire duration (e.g., in kHz range, e.g., 90 kHz) of a given cycle, bypassed during the entire duration (e.g., in kHz range, e.g., 90 kHz) of a given cycle, or "on" during only a portion of the given cycle's duration. It should be noted that an energy storage module is in the energy mode when it is "on" and in the bypass mode when it is being bypassed. As noted above, the low side transistors (e.g., FETs **110-3, 110-4** of FIG. 6) are in their "on" states when the energy storage module is in its bypass mode. As such, the capacitors (e.g., capacitors $178_1, 178_2$ of FIG. 1E) that supply power to the high-side gate driver output stages (e.g., stages $176_1, 176_2$ of FIG. 6) are charged when the energy storage module in its bypass mode.

In FIG. 5, the ratio **R** is 2.5 which indicates that (I) two energy storage modules are to be "on" the entire duration of the given cycle, (II) one energy storage module is to be "on" for only a portion of the given cycle's duration, and (III) one battery is to be "off" for the entire given cycle's duration. The portion of the given cycle's duration is computed in accordance with the following mathematical equation (2)-(3).

$$\mathbf{V_R} = \mathbf{Vout} - \mathbf{BM_{entire}(V_{100})} \hspace{3cm} (2)$$

$$\mathbf{P} = (\mathbf{V_R/V_{100}}) \cdot 100 \hspace{4cm} (3)$$

$V_R$ represents a remaining voltage, $BM_{entire}$ represents a total number of energy storage modules that are to be on the entire cycle duration, and **P** represents a percentage of the cycle duration.

Based on the results from operations (1) and (3), the controller controls the four energy storage modules accordingly. For example, in a cycle **C,** the controller causes both energy storage module $100_1$ and $100_2$ to be on for 100% of the cycle. Controller also causes energy storage module $100_3$ to be on for 50% of the cycle. Energy storage module $100_4$ is on for 0% of the cycle. A graph **800** is provided in FIG. 6 which is useful for understanding operations of the energy storage modules during a plurality of cycles **C-3, C-2, C-1, C, C+1, C+2, C+3, C+4, C+5, C+6**. It is evident from graph **800** that a different energy storage module is in its "off" state per cycle. This allows the capacitors $118_1, 118_2$ to periodically recharge during operation of the power supply. It is also evident from graph **800** that (i) a different combination of energy storage modules are in their "on" states during each cycle and (ii) a different energy storage module is used per cycle to supply voltage during 50% of the cycle duration.

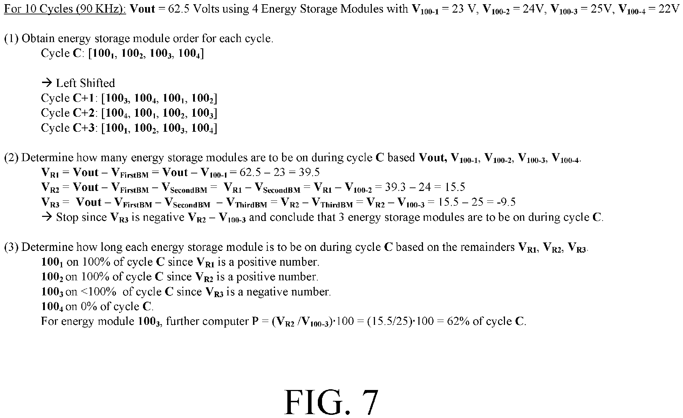

Referring now to FIG. 7, a second scenario will be described in which the energy storage modules have different voltages. It should be noted that the process of FIG. 7 can also be used in scenarios similar to FIGS. 5-6 in which the energy storage modules have the same voltages.

Similar to the first scenario of FIG. 5-6, the energy storage modules may be controlled in the second scenario of FIG. 7 for ten consecutive cycles each 90 kHz long. The output voltage **Vout** may be 62.5 Volts. Energy storage modules $100_1, 100_2, 100_3, 100_4$ may be selected to provide the 62.5 Volt output. The output voltage for an energy storage module may be is referred to as $V_{100-X}$, where X is a number assigned to a particular energy storage module. The output voltage for energy storage module $100_1$ is $V_{100-1}$. The output voltage for energy storage module $100_2$ is $V_{100-2}$. The output voltage for energy storage module $100_3$ is $V_{100-3}$. The output voltage for energy storage module $100_4$ is $V_{100-4}$. Voltage $V_{100-1}$ may be 25 Volts. Voltage $V_{100-2}$ may be 24 Volts. Voltage $V_{104-3}$ may be 23 Volts. $V_{100-4}$ may be 22 Volts. The output voltages $V_{100-1}, V_{100-2}, V_{100-3}, V_{100-4}$ may can be obtained via LUT operation(s) that involve accessing LUT(s) stored in a datastore of the power supply.

With regard to operation (1), the energy module order for cycle **C** may be prespecified as $[100_1, 100_2, 100_3, 100_4]$. The energy module order is changed per cycle so that the capacitors $178_1, 178_2$ of each energy storage module are periodically re-charged to avoid the gate drivers from entering an undervoltage state. The energy module order can be changed in accordance with a shifting scheme, a random or pseudo-random scheme, or a criteria-based scheme. For example, as shown in FIG. 7, the energy module order is changed per cycle by a shift of two to the left. The present solution is not limited in this regard. The energy module order(s) can be obtained via LUT operation(s) that involve accessing LUT(s) stored in the datastore (e.g., datastore **296** of FIG. 2) of the power supply.

Operation (2) involves determining how many energy storage modules are to be on during each cycle. This determination can be made based on the values of **Vout, $V_{100-1}$, $V_{100-2}$, $V_{100-3}$, $V_{100-4}$.** This determination involves computing voltage remainders using these listed values. The voltage remainders may be defined by the following mathematical equations (4)-(6).

$$V_{R(1)} = Vout - V_{FirstBM} \tag{4}$$

$$V_{R(2)} = Vout - V_{FirstBM} - V_{SecondBM} = V_{R(1)} - V_{SecondBM} \tag{5}$$

$$. . .$$

$$V_{R(N)} = Vout - V_{FirstBM} - V_{SecondBM} - . . . - V_{NthBM} = V_{R(N-1)} - V_{NthBM} \tag{6}$$

where $V_{R(1)}$ represents a first remaining voltage, $V_{R(2)}$ represents a second remaining voltage, $V_{R(N)}$ represents and Nth remaining voltage, $V_{FirstBM}$ represents a first energy storage module identified in the energy module order for a given cycle, $V_{SecondBM}$ represents a second energy storage module identified in the energy module order for the given cycle, and $V_{NthBM}$ represents an Nth energy storage module identified in the energy module order for the given cycle. The remainder computation is completed when a result has a negative value. This will become clearer by applying mathematical equations (4)-(6) to the scenarios of FIG. 7.

As shown in FIG. 7, mathematical equation (4)-(6) can be re-written as follows for cycle C.

$$V_{R(1)} = Vout - V_{FirstBM} = Vout - V_{100-1} = 62.5 - 23 = 39.5$$

$$V_{R(2)} = V_{R(1)} - V_{SecondBM} = V_{R(1)} - V_{100-2} = 39.5 - 24 = 15.5$$

$$V_{R(3)} = V_{R(2)} - V_{ThirdBM} = V_{R(2)} - V_{100-3} = 15.5 - 25 = \text{-}9$$

Since $V_{R(3)}$ is a negative number, the remainder computation operation is stopped or otherwise terminated. The system concludes or otherwise determines that three energy storage modules are to be on during cycle **C** based on these computations.

Operation (3) involves determining how long each energy storage module is to be on during each cycle based on the remainders $V_{R(1)}$, $V_{R(2)}$, ... , $V_{R(N)}$. Each energy storage module can be "on" during the entire duration (e.g., in kHz range, e.g., 90 kHz) of a given cycle, "off" during the entire duration (e.g., in kHz range, e.g., 90 kHz) of a given cycle, or "on" during only a portion of the given cycle's duration. In FIG. 7, energy storage modules **$100_1$, $100_2$** are on for 100% of cycle **C** since $V_{R(1)}$ and $V_{R(2)}$ are positive numbers. Energy storage module **$100_4$** is off for 100% of cycle **C** since only three energy storage modules are to be on during cycle **C.** However, energy storage module **$100_3$** is to be on for less than 100% of cycle **C** since $V_{R(2)}$ is a negative number. Mathematical equation (3) can be used to determine the percentage of cycle **C** that energy storage module **$100_3$** is to be on. As such, mathematical equation (3) can be rewritten as shown below for the scenario of FIG. 7.

$$P = (V_{R(2)} / V_{100-3}) \cdot 100 = (15.5/25) \cdot 100 = 62\%$$

Based on results of this computation, the system concludes or otherwise determines that energy storage module **$100_3$** is to be on 62% of cycle **C.**

The above-described operations (1)-(3) are repeated for a next cycle **C+1.** This iterative process provides a pulse width modulation (PWM) duty cycle which allows the low side transistors (e.g., FETs **110-3, 110-4** of FIG. 6) of each energy storage module to be intermittingly turned on for charging the capacitors (e.g., capacitors **$178_1$, $178_2$** of FIG. 6) that supply power to the high-side gate driver output stages (e.g., stages **$176_1$, $176_2$** of FIG. 6).

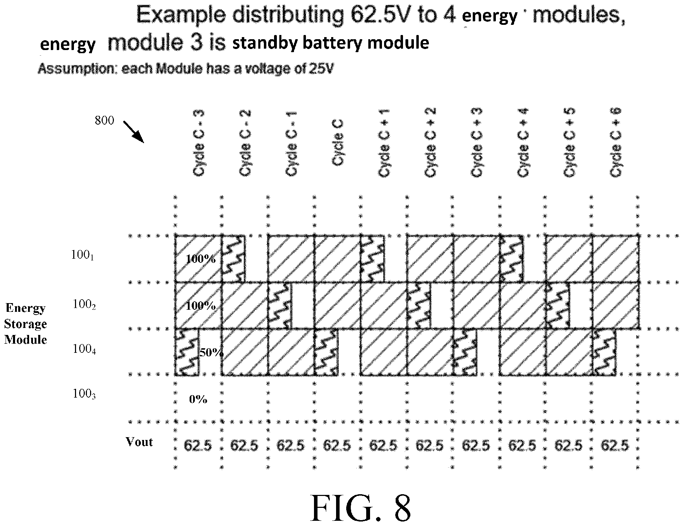

Referring now to FIG. 8, a graph **800** is provided that is useful for understanding operation of a power supply (e.g., power supply system **300** of FIG. 3 or **400** of FIG. 4) in which an energy storage module is selected to act as a standby energy module. The standby energy module provides an inter-module charge balancing feature to the power supply. This inter-module charge balancing feature ensures that, during the charging mode and discharging mode of the power supply, the state of charge of each energy storage module may be periodically checked at defined times (e.g., every **x** ms, where **x** is an integer equal to or greater than one). The LUTs may be updated at this time. In the discharging mode, the energy storage module with the lowest state of charge is selected as the standby energy module. In contrast, in the charging mode, the energy storage module with the highest state of charge is selected as the standby energy module.

FIG. 8 covers a scenario in which the power supply is in the discharging mode of operation. The standby energy module can be the same in each cycle of the **N** cycles as shown in FIG. 8 or different in each cycle or a given number of cycles. The corresponding graph for the later scenario would look the same as or similar to that shown in FIG. 6. Thus, FIG. 6 is sufficient for understanding the later scenario. FIG. 8 illustrates the scenario in which energy storage module **100₃** is selected as the standby energy module for all cycles **C-3, C-2, C-1, C, C+1, C+2, C+3, C+4, C+5, C+6**. In effect, energy storage module **100₃** is in its bypass mode during 100% of each cycle when the output voltage of the power supply is 62.5 Volts.

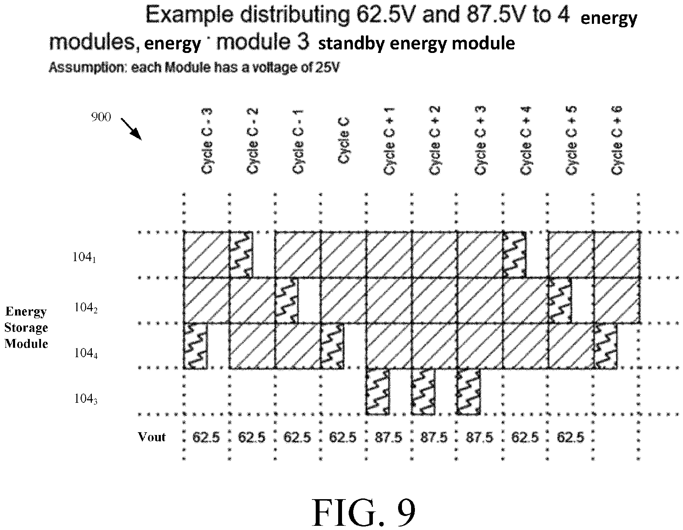

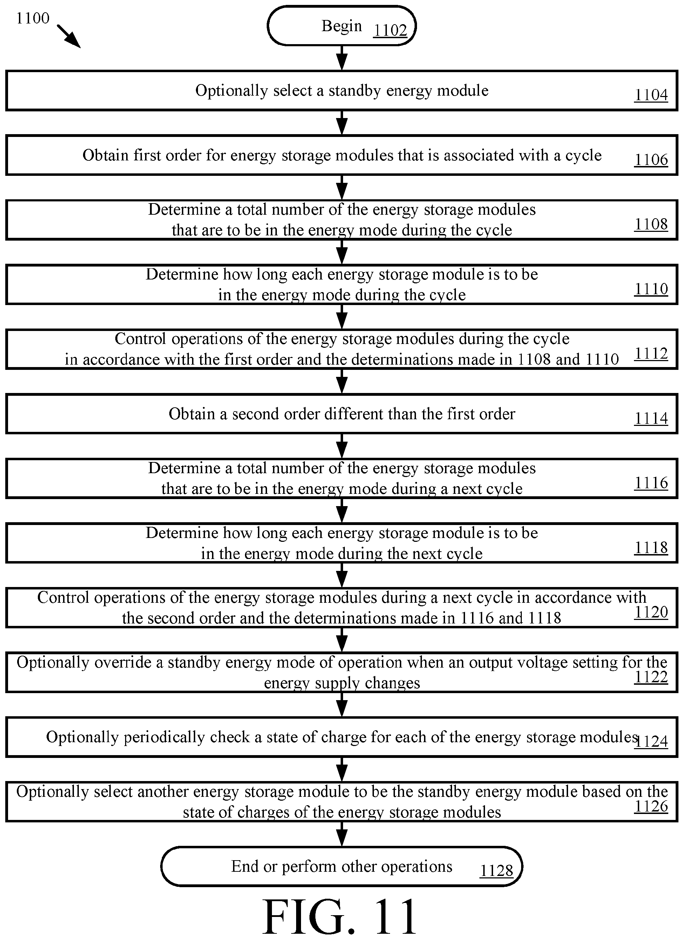

FIG. 9 provides another graph **900** in which the power supply is configured to supply 62.5 Volts during some cycles and 87.5 Volts during some other cycles. Energy storage module $100_3$ has been selected as the standby energy module since it has the lowest state of charge compared to that of the other energy storage modules **100₁, 100₂, 100₄.** Since only three energy storage modules are needed to supply the 62.5 Volts, standby energy module **100₃** is placed or remains in its bypass mode during cycle **C-3, C-2, C-1, C**. However, four energy storage modules are needed to supply 87.5 Volts. Thus, the standby assignment to energy storage module **100₃** is overridden. As such, energy storage module **100₃** is placed in its energy mode during cycle **C+1** and remains in its energy mode during subsequent cycles **C+2**, **C+3**. The standby assignment of energy storage module **100₃** is no longer overridden in cycle **C+4.** Consequently, energy storage module **100₃** is returned to its bypass mode in cycle **C+4.** The energy storage module **100₃** remains in its bypass mode during next cycles **C+5** and **C+6**. The present solution is not limited to the particulars of FIG. 11.

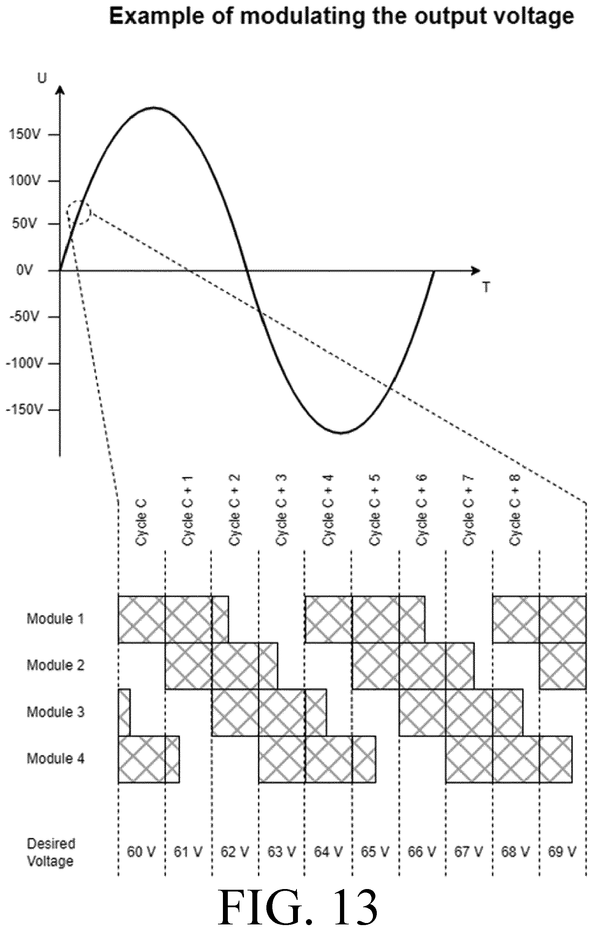

It should be noted that the illustrations of FIGS. 8, 10 and 11 cover other output scenarios. FIG. 13 provides an illustration that is useful for understanding operations of the present solution for an alternating current output scenario.

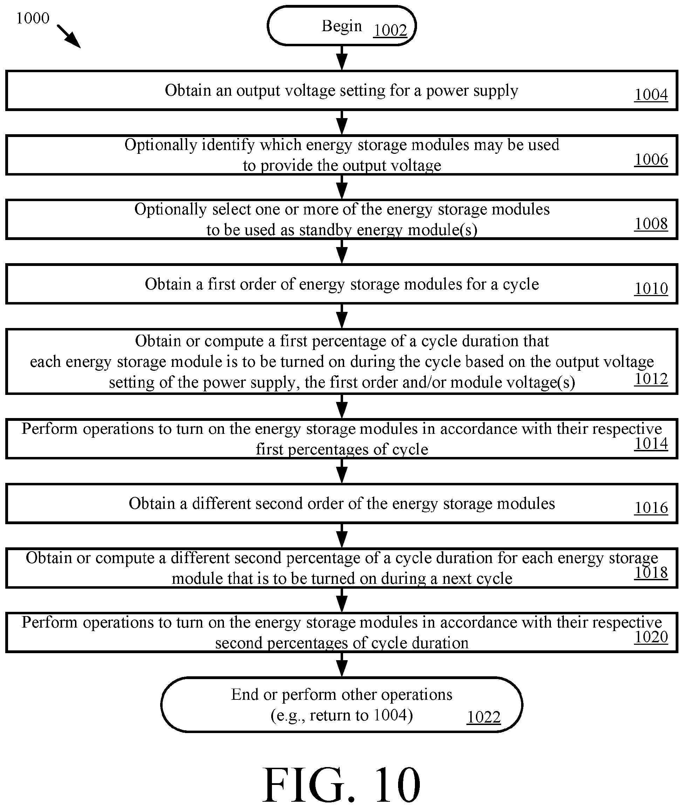

FIG. 10 provides a flow diagram of an illustrative method **1000** for operating a power supply (e.g., power supply system **300** of FIG. 3 or **400** of FIG. 4). Some or all of the operations of method **1000** can be performed by a controller of the power supply. The operations of method **1000** can be performed in the same or different order than that shown. Method **1000** can include more or less operations than that shown in FIG. 12. For example, method **1000** may be absent of blocks **1016, 1018** and **1020**. For example, method **1000** may be absent of blocks **1016, 1018** and **1020.**

Method **1000** begins with **1002** and continues to **1004** where an output voltage setting for the power supply is obtained. Next in optional **1006,** the system identifies which energy storage module(s) may be used to provide the output voltage. This identification can be based on, for example, a level of charge of each battery module. The battery module(s) with highest level(s) of charge may be identified for use in providing the output voltage. One or more of the battery modules may be selected in block **1008** to be standby energy storage module(s). For example, the energy storage module(s) with the lowest level(s) of change is(are) selected in block **1008.**

A first order of energy storage modules for a cycle is obtained in **1010.** The first order may be pre-defined and obtained from an LUT. In **1012,** the system obtains or computes a first percentage of a cycle duration that each energy storage module is to be turned "on" during the cycle based on the first order, the output voltage setting of the power supply, and/or module voltages. The system then performs operations in **1014** to turn "on" the energy storage modules in accordance with their respective first percentages of cycle duration.

In **1016,** the system obtains a second different order of energy storage modules. The second order may be pre-defined and obtained from an LUT. Alternatively, the second order may be dynamically determined. Different second percentages of cycle duration are obtained or computed in **1018** for each energy storage module that is to be turned "on" during the next cycle. The second percentages can be computed based on the second order, the output voltage setting of the power supply, and/or module voltages. The system then perform operations in **1020** to turn "on" the energy storage modules in accordance with their respective second percentages of cycle duration. Subsequently, method **1020** continues to **1022** where it ends or other operations are performed. The other operations can include, but are not limited to, returning to block **1002.**

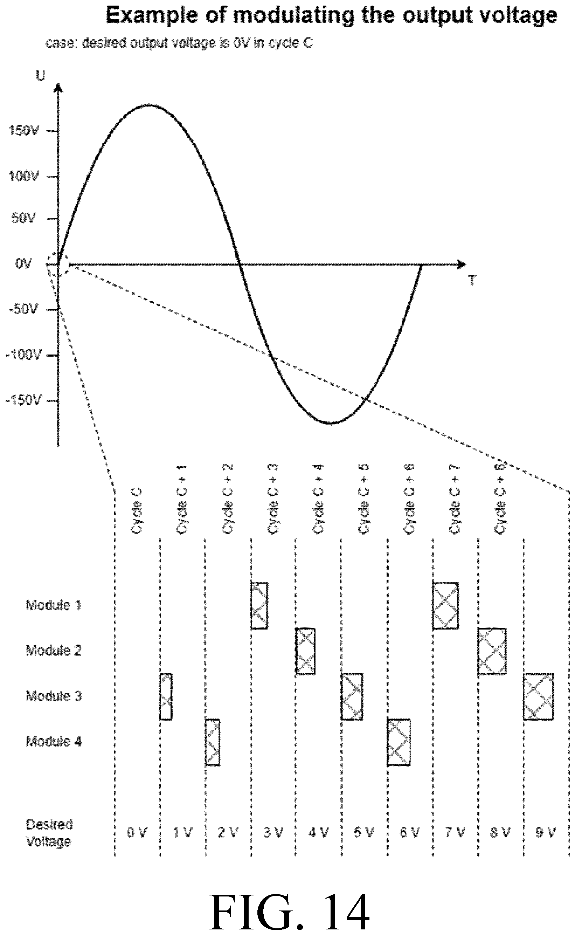

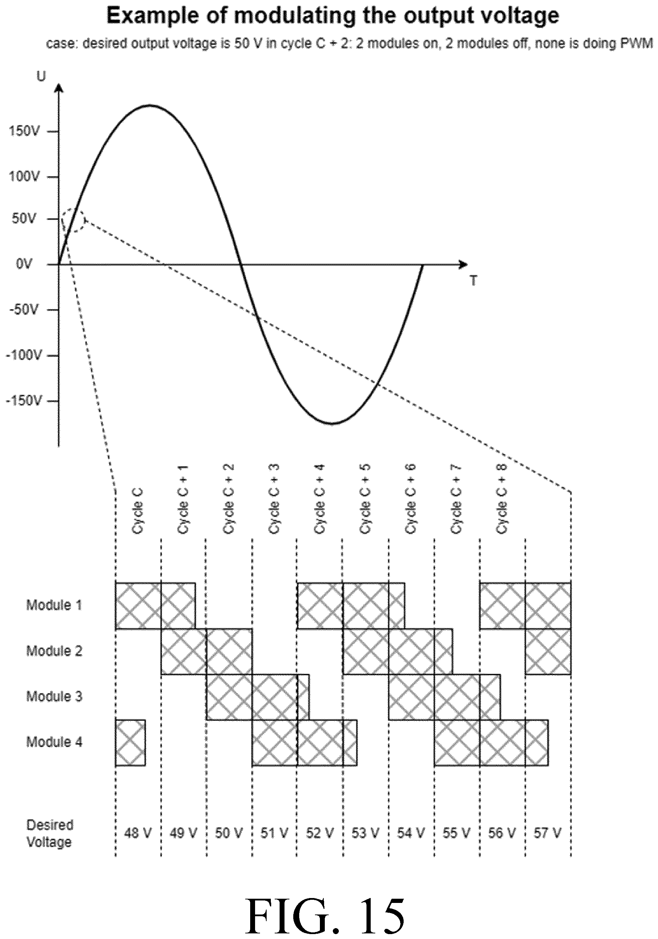

FIGS. 14 and 15 provides illustration that are useful for understanding corner cases. FIG. 14 covers the case in which all energy storage modules are "off' in one or more cycles. For example, all of the energy storage module may be "off' in cycle **C** and **C+10** as shown in FIG. 14. Stated different, all energy storage modules are "on" 0% of one or more cycles. This may occur when a zero volt output is needed. FIG. 15 covers the case in which some of the energy storage modules are "on" 100% of cycle(s) while other energy storage modules are "on" 0% of the cycle(s). This can occur when a one hundred volt output is needed and there are four energy storage modules with exactly 25 volts associated therewith. In another corner case not covered by FIGS. 14-15, one energy storage module may be in its energy mode for a fraction of the cycle and all other energy storage modules are in their energy mode for the entire cycle.

FIG. 11 provides a flow diagram of another method **1100** for operating a power supply. Some or all of the operations of method **1100** can be performed by a controller of the power supply. The operations of method **1100** can be performed in the same or different order than that shown. Method **1100** can include more or less operations than that shown in FIG. 13. For example, method **1100** may be absent of blocks **1116, 1118** and **1120.** For example, method **1100** may be absent of blocks **1116, 1118** and **1120.**

Method **1100** begins with **1102** and continues with **1104** where the system selects one or more energy storage modules (e.g., energy storage module **100** of FIG. 1) to be standby energy module(s) for a period of time. This selection can involve: identifying an energy storage module with a lowest state of charge; and considering the energy storage module with the lowest state of charge as being the standby energy storage module. In block **1106,** the system obtains a first order for energy storage modules that is associated with a cycle (e.g., cycle C) of a plurality of cycles having a duration. The first order may be obtained from an LUT stored in a datastore of the power supply.

Next in **1108,** the system determines a total number of energy storage modules that are to be in the energy mode during the cycle. This determination can involve: computing a first voltage remainder by subtracting at least a module voltage for the first energy storage module from an output voltage setting value of the power supply; iteratively re-computing the voltage remainder by additionally subtracting a module voltage for another energy storage module from the output voltage setting value of the power supply; discontinuing the re-computing when the voltage remainder has a negative value; and/or setting the total number of energy storage modules equal to a total number of energy storage modules associated with the module voltages used to obtain the voltage remainder having the negative value.

Block **1110** involves determining how long each energy storage module is to be in the energy mode during the cycle based on a sign of a respective value of the voltage remainder and/or a positive number corresponding to the negative value. Block **1110** may also involve determining how long another energy storage module is to be in the energy mode during the cycle based on a ratio of a value of the voltage remainder which was computed in an immediately previous iteration and the module voltage associated with the another energy storage module.

Block **1112** involves controlling operations of the energy storage modules during the cycle in accordance with the first order and the determinations made in blocks **1108** and **1110.** At least a first energy storage module is in the energy mode for only a portion of the duration of the cycle. At least one second energy storage module may be in a bypass mode throughout an entirely of the cycle. The energy mode is a mode in which output terminals of a battery module are indirectly connected to each other via energy storage component(s). The bypass mode is a mode in which an output terminals of a battery module are directly connected to each other. A third energy storage module may be in the energy mode during an entire duration of the cycle.

In block **1114,** the system obtains a second order for the energy storage modules that is different from the first order thereof. This operation can involve: shifting the first order in a right or left direction to obtain the second order; or determining the second order based on a predicted state of charge of a capacitor configured to supply voltage for a high-side gate driver output stage, a duration of charge for the capacitor, a predicted time that the capacitor's charge level falls below a threshold, a last time of charge for the capacitor, a last time that an energy storage module was in the energy mode for an entire cycle, and/or a frequency that each energy storage module should be transitioned to a bypass mode to avoid or minimize a chance that a gate driver enters an undervoltage state.

Next in **1116,** the system determines a total number of energy storage modules that are to be in the energy mode during the next cycle. This determination can be made by subtracting the module voltage for energy storage module(s) from the output voltage setting value of the power supply. In **1118,** the system determines how long each energy storage module is to be in the energy mode during the next cycle based on a sign of a respective value of a voltage remainder and/or a positive number corresponding to a negative value of the voltage remainder.

The system then performs operations in **1120** to control the energy storage modules during a next cycle in accordance with the second order and the determinations made in blocks **1116** and **1118.** A fifth energy storage module (rather than the first energy storage module) is in the energy mode for only a portion of the duration of the next cycle. The second energy storage module is in the energy mode during the next cycle. The fifth energy storage module may include, but is not limited to, the third module, the fourth module or another module. The fifth energy storage module may include, but is not limited to, the third module, the fourth module or another module.

Method **1100** may continue with optional operations in blocks **1122-1126.** These optional operations involve: overriding a standby energy mode of operation for the at least one of the energy storage modules when an output voltage setting for the power supply changes; periodically checks a state of charge for each of the energy storage modules; and/or selecting at least one other energy storage module to be the standby energy module. Subsequently, method **1100** continues to block **1128** where it ends or other operations are performed. The other operations can include, but are not limited to, returning to **1106** or **1114.**

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described scenarios. Rather, the scope of the present solution should be defined in accordance with the following claims and their equivalents.

Without excluding further possible embodiments, certain example embodiments are summarized in the following clauses:

Clause 1: A method for operating a controllable output power circuit, comprising: providing (e.g., by a circuit) a first order for a plurality of energy storage modules that is associated with a cycle of a plurality of cycles having a duration; controlling (e.g., by the circuit) operations of the plurality of energy storage modules during the cycle in accordance with the first order, wherein at least a first energy storage module of the plurality of energy storage modules is in an energy mode for only a portion of the duration of the cycle or for less than the duration of the cycle; and controlling (e.g., by the circuit) operations of the plurality of energy storage modules during a next cycle of the plurality of cycles in accordance with a second order different than the first order, wherein at least a different second energy storage module of the plurality of energy storage modules is in the energy mode for less than the duration of the next cycle. The energy mode is a mode in which output terminals of a respective energy storage module are indirectly connected to each other via one or more energy storage components.

Clause 2: The method of clause 1, further comprising determining (e.g., by the circuit) a total number of energy storage modules that are to be in the energy mode during the cycle by computing a first voltage remainder by subtracting at least a module voltage for the first energy storage module from an output voltage setting value of the controllable output power circuit.

Clause 3: The method of any of the preceding clauses, wherein said determining further comprises iteratively re-computing the voltage remainder by additionally subtracting a module voltage for another energy storage module of the plurality of energy storage modules from the output voltage setting value of the controllable output power circuit.

Clause 4: The method of any of the preceding clauses, wherein said determining further comprises discontinuing said re-computing when the voltage remainder has a negative value.

Clause 5: The method of any of the preceding clauses, wherein said determining further comprises setting the total number of energy storage modules equal to a total number of energy storage modules associated with the module voltages used to obtain the voltage remainder having the negative value.

Clause 6: The method of any of the preceding clauses, further comprising determining (e.g., by the circuit) how long each energy storage module of the plurality of energy storage modules is to be in the energy mode during the cycle based on a sign of a respective value of the voltage remainder and/or a positive number corresponding to the negative value.

Clause 7: The method of any of the preceding clauses, further comprising determining, by the circuit, how long the another energy storage module is to be in the energy mode during the cycle based on a ratio of a value of the voltage remainder which was computed in an immediately previous iteration and the module voltage associated with the another energy storage module.

Clause 8: The method of any of the preceding clauses, wherein the first order for a plurality of energy storage modules is obtained from a look-up table stored in a memory of the controllable output power circuit.

Clause 9: The method of any of the preceding clauses, further comprising shifting the first order in a right or left direction to obtain the second order.

Clause 10: The method of any of the preceding clauses, further comprising determining the second order based on a predicted state of charge of a capacitor configured to supply voltage for a high-side gate driver output stage, a duration of charge for the capacitor, a predicted time that the capacitor's charge level falls below a threshold, a last time of charge for the capacitor, a last time that an energy storage module was in the energy mode for an entire cycle, and/or a frequency that each energy storage module should be transitioned to a bypass mode to avoid or minimize a chance that a gate driver enters an undervoltage state.

Clause 11: The method of any of the preceding clauses, wherein at least a third energy storage module of the plurality of energy storage modules is in a bypass mode throughout an entirely of the cycle, the bypass mode being a mode in which an output terminals of an energy storage module (e.g., a battery module) are directly connected (e.g., via one or more switches) to each other.

Clause 12: The method of any of the preceding clauses, wherein the third energy storage module is in the storage energy mode during the next cycle.

Clause 13: The method of any of the preceding clauses, wherein at least a fourth energy storage module is in the energy mode during an entire duration of the cycle.

Clause 14: The method of any of the preceding clauses, further comprising selecting at least one of the plurality of energy storage modules to be a standby energy storage module for a period of time.

Clause 15: The method of any of the preceding clauses, wherein the selecting comprises identifying an energy storage module of the plurality of energy storage modules with a lowest or highest state of charge, and considering the energy storage module with the lowest or highest state of charge as being the standby energy storage module.

Clause 16: The method of any of the preceding clauses, further comprising overriding a standby energy mode of operation for the at least one of the plurality of energy storage modules when an output voltage setting for the power supply changes.

Clause 17: The method of any of the preceding clauses, further comprising periodically checking a state of charge for each of the plurality of energy storage modules.

Clause 18: The method of any of the preceding clauses, further comprising selecting at least one other one of the plurality of energy storage modules to be the standby energy storage module.

Clause 19: A controllable output power circuit, comprising a processor configured to: obtain a first order for a plurality of energy storage modules that is associated with a cycle of a plurality of cycles having a duration; control operations of the plurality of energy storage modules during the cycle in accordance with the first order, wherein at least a first energy storage module of the plurality of energy storage modules is in an energy mode for only a portion of the duration of the cycle or for less than the duration of the cycle; and control operations of the plurality of energy storage modules during a next cycle of the plurality of cycles in accordance with a second order different than the first order, wherein at least a different second energy storage module of the plurality of energy storage modules is in the energy mode for less than the duration of the next cycle.

Clause 20: A controllable output power circuit, comprising: a plurality of energy storage modules; and a circuit communicatively connected to the plurality of energy storage modules and configured to: obtain a first order for the plurality of energy storage modules that is associated with a cycle of a plurality of cycles having a duration; control operations of the plurality of energy storage modules during the cycle in accordance with the first order, wherein at least a first energy storage module of the plurality of energy storage modules is in an energy mode for only a portion of the duration of the cycle or for less than the duration of the cycle; and control operations of the plurality of energy storage modules during a next cycle of the plurality of cycles in accordance with a second order different than the first order, wherein at least a different second energy storage module of the plurality of energy storage modules is in the energy mode for less than the duration of the next cycle.

Clause 21: An H-bridge inverter circuit (144) comprising a supply bus, driver circuit (176), a voltage regulator (164), and a bootstrap supply capacitor (178). The supply bus comprises: a high supply line (152) disposed to provide drain voltage to high-side FETs (110-2 and 110-1); and a low supply line (154) with a voltage below the high supply line (152). The driver circuit (176) is provided for driving the high-side FETs (110-2, 110-1). The voltage regulator (164) is provided for powering the driver circuit (176, 166) by a drive voltage (V at 166 output) which is lower than the voltage on the supply line (V at 152). The bootstrap supply capacitor (178) is provided for each high-side FET (110-2, 110-1). Each bootstrap supply capacitor (178) is configured to store electrical energy which is used to drive the respective high-side FET (110-2, 110-1). Each bootstrap supply capacitor (178) is chargeable via a respective diode (166) which allows its bootstrap supply capacitor (178) to be charged only when the source voltage (V at 156, 158) of the corresponding FET is slewing towards the low supply line (V at 154).

Clause 22: System (e.g., an electrical system or unit) comprising means for performing the method steps of any of the herein disclosed methods, e.g., method steps.

Clause 23: A software product comprising instructions which when executed by a suitable processor or electrical unit or system, causes the processor or the electrical unit or system to perform the herein disclosed methods, e.g., method steps.

The breadth and scope of this disclosure should not be limited by any of the above-described example embodiments, but should be defined only in accordance with the following claims and their equivalents.

**Claims**

1. A method for operating a controllable output power circuit, comprising:

   providing a first order for a plurality of energy storage modules that is associated with a cycle of a plurality of cycles having a duration;
   controlling operations of the plurality of energy storage modules during the cycle in accordance with the first order, wherein at least a first energy storage module of the plurality of energy storage modules is in an energy mode for only a portion of the duration of the cycle or for less than the duration of the cycle; and
   controlling operations of the plurality of energy storage modules during a next cycle of the plurality of cycles in accordance with a second order different than the first order, wherein at least a different second energy storage module of the plurality of energy storage modules is in the energy mode for less than the duration of the next cycle;
   wherein the energy mode is a mode in which output terminals of a respective energy storage module are indirectly connected to each other via one or more energy storage components.

2. The method according to claim 1, further comprising determining a total number of energy storage modules that are to be in the energy mode during the cycle by computing a first voltage remainder by subtracting at least a module voltage for the first energy storage module from an output voltage setting value of the controllable output power circuit.

3. The method according to claim 2, wherein said determining further comprises iteratively re-computing the voltage remainder by additionally subtracting a module voltage for another energy storage module of the plurality of energy storage modules from the output voltage setting value of the controllable output power circuit.

4. The method according to claim 2 or 3, wherein said determining further comprises discontinuing said re-computing when the voltage remainder has a negative value.

5. The method according to any of the claims 2-4, wherein said determining further comprises setting the total number of energy storage modules equal to a total number of energy storage modules associated with the module voltages used to obtain the voltage remainder having the negative value.

6. The method according to any of the preceding claims, further comprising determining how long each energy storage module of the plurality of energy storage modules is to be in the energy mode during the cycle based on a sign of a respective value of the voltage remainder and/or a positive number corresponding to the negative value.

7. The method according to any of the preceding claims, further comprising determining, by the circuit, how long the another energy storage module is to be in the energy mode during the cycle based on a ratio of a value of the voltage remainder which was computed in an immediately previous iteration and the module voltage associated with the another energy storage module.

8. The method according to any of the preceding claims, wherein the first order for a plurality of energy storage modules is obtained from a look-up table stored in a memory of the controllable output power circuit.

9. The method according to any of the preceding claims, further comprising determining the second order based on a predicted state of charge of a capacitor configured to supply voltage for a high-side gate driver output stage, a duration of charge for the capacitor, a predicted time that the capacitor's charge level falls below a threshold, a last time of charge for the capacitor, a last time that an energy storage module was in the energy mode for an entire cycle, and/or a frequency that each energy storage module should be transitioned to a bypass mode to avoid or minimize a chance that a gate driver enters an undervoltage state.

10. The method according to any of the preceding claims, wherein at least a third energy storage module of the plurality of energy storage modules is in a bypass mode throughout an entirely of the cycle, the bypass mode being a mode in which an output terminals of an energy storage module are directly connected to each other.

11. The method according to any of the preceding claims, further comprising selecting at least one of the plurality of energy storage modules to be a standby energy storage module for a period of time.

12. The method according to claim 11, wherein the selecting comprises identifying an energy storage module of the plurality of energy storage modules with a lowest or highest state of charge, and considering the energy storage module with the lowest or highest state of charge as being the standby energy module.

13. The method according to any of the above claims, further comprising overriding a standby energy mode of operation for the at least one of the plurality of energy storage modules when an output voltage setting for the power supply changes.

14. An electrical system comprising means for performing the steps of any of the above method claims.

15. A computer software product comprising instructions which when executed by one or more processors of a suitable electrical system cause any of the processors to perform the steps of any of the above method claims.

FIG. 1A

**Circuit 120**

Electrical Energy Storage Cells 102

Selective Circuit Interrupt 134

510

Transistor Active Bridge Circuit 144
110-2    102    110-1

Voltage and/or Current Sensor(s) 126

Data Processing Circuit 132

138

136

S1
S2

Temperature Sensor 128

110-3    110-4

Module Temperature Sensor 130

Isolator(s)

To/From Circuit 120

512

FIG. 1B

FIG. 1C

100

Control Bus
Interface
152

Power Out
Interface
151

Top
Cover
155

101

Bottom
Cover
157

# FIG. 1D

144

152

## FIG. 1E

Voltage Regulator
**164**

Gate Driver
**160₁**

176₁

166₁

170₁

178₁

Logic and
Isolation
Circuit

110-2  110-1

D

G

S

156

194

S2

158

S1

196

110-3 110-4

D

G

S

180₁

Gate Driver
**160₂**

166₂

176₂

170₂

178₂

Logic and
Isolation
Circuit

D

G

S

170₂

180₂

154

FIG. 2A

200

202

202a

202b

FIG. 2B

FIG. 2C

FIG. 3A

FIG. 3B

FIG. 4

For 10 Cycles (90 KHz): **Vout** = 62.5 Volts using 4 Energy Modules with Voltage $V_{100}$ = 25 V

(1) Obtain energy module order for each cycle.
　　Cycle **C**: [**100₁, 100₂, 100₃, 100₄**]

　　　　→ Right Shifted (by 1 or more)　　　　　　　　　→ Left Shifted
　　　　Cycle **C+1**: [**100₄, 100₁, 100₂, 100₃**]　　　　Cycle **C-1**: [**100₂, 100₃, 100₁, 100₄**]
　　　　Cycle **C+2**: [**100₃, 100₄, 100₁, 100₂**]　　　　Cycle **C-2**: [**100₃, 100₂, 100₁, 100₄**]
　　　　Cycle **C+3**: [**100₂, 100₃, 100₄, 100₁**]　　　　Cycle **C-3**: [**100₄, 100₁, 100₂, 100₃**]
　　　　Cycle **C+4**: [**100₁, 100₂, 100₃, 104₄**]
　　　　Cycle **C+5**: [**100₄, 100₁, 100₂, 104₃**]
　　　　Cycle **C+6**: [**100₃, 100₄, 100₁, 100₂**]

(2) Determine how many energy storage modules are to be on during a each cycle based on ratio $R$ = **Vout**/$V_{100}$ = 62.5/25 = 2.5 → 3

(3) Determine how long each energy storage module is to be on during a given cycle based on $R$ = 2.5 → two energy storage modules are on during the entire cycle, one energy storage module is on during a portion of the cycle, and one energy storage module is off during the entire cycle.

→ To determine the portion of the cycle that the third energy storage module is to be on, compute the following:
　　$V_R$ = **Vout** - 2($V_{100}$) = 62.5 – 50 = 12. 5
　　$V_R$/$V_{100}$ = 12.5/25 = 0.5 indicating that the third energy storage module is to be on for half of the given cycle.

So, for Cycle **C** → [**100₁** on 100%, **100₂** on 100%, **100₃** on 50%, **100₄** on 0%]

# FIG. 5

Example distributing 62.5V to 4 energy modules

FIG. 6

For 10 Cycles (90 KHz): **Vout** = 62.5 Volts using 4 Energy Storage Modules with $V_{100-1}$ = 23 V, $V_{100-2}$ = 24V, $V_{100-3}$ = 25V, $V_{100-4}$ = 22V

(1) Obtain energy storage module order for each cycle.
Cycle **C**: [**100₁, 100₂, 100₃, 100₄**]

→ Left Shifted
Cycle **C+1**: [**100₃, 100₄, 100₁, 100₂**]
Cycle **C+2**: [**100₄, 100₁, 100₂, 100₃**]
Cycle **C+3**: [**100₁, 100₂, 100₃, 100₄**]

(2) Determine how many energy storage modules are to be on during cycle **C** based **Vout, $V_{100-1}$, $V_{100-2}$, $V_{100-3}$, $V_{100-4}$**.
$V_{R1}$ = **Vout** – $V_{FirstBM}$ = **Vout** – $V_{100-1}$ = 62.5 – 23 = 39.5
$V_{R2}$ = **Vout** – $V_{FirstBM}$ – $V_{SecondBM}$ = $V_{R1}$ – $V_{SecondBM}$ = $V_{R1}$ – $V_{100-2}$ = 39.3 – 24 = 15.5
$V_{R3}$ = **Vout** – $V_{FirstBM}$ – $V_{SecondBM}$ – $V_{ThirdBM}$ = $V_{R2}$ – $V_{ThirdBM}$ = $V_{R2}$ – $V_{100-3}$ = 15.5 – 25 = -9.5
→ Stop since $V_{R3}$ is negative $V_{R2}$ – $V_{100-3}$ and conclude that 3 energy storage modules are to be on during cycle **C**.

(3) Determine how long each energy storage module is to be on during cycle **C** based on the remainders $V_{R1}$, $V_{R2}$, $V_{R3}$.
**100₁** on 100% of cycle **C** since $V_{R1}$ is a positive number.
**100₂** on 100% of cycle **C** since $V_{R2}$ is a positive number.
**100₃** on <100% of cycle **C** since $V_{R3}$ is a negative number.
**100₄** on 0% of cycle **C**.
For energy module **100₃**, further computer **P** = ($V_{R2}$ /$V_{100-3}$)·100 = (15.5/25)·100 = 62% of cycle **C**.

# FIG. 7

Example distributing 62.5V to 4 energy modules,
energy module 3 is standby battery module

Assumption: each Module has a voltage of 25V

FIG. 8

Example distributing 62.5V and 87.5V to 4 energy modules, energy ˙ module 3 standby energy module

Assumption: each Module has a voltage of 25V

| Energy Storage Module | | Cycle C - 3 | Cycle C - 2 | Cycle C - 1 | Cycle C | Cycle C + 1 | Cycle C + 2 | Cycle C + 3 | Cycle C + 4 | Cycle C + 5 | Cycle C + 6 |
|---|---|---|---|---|---|---|---|---|---|---|---|
| | 104₁ | | | | | | | | | | |
| | 104₂ | | | | | | | | | | |
| | 104₄ | | | | | | | | | | |
| | 104₃ | | | | | | | | | | |
| Vout | | 62.5 | 62.5 | 62.5 | 62.5 | 87.5 | 87.5 | 87.5 | 62.5 | 62.5 | |

FIG. 9

1000

Begin 1002

Obtain an output voltage setting for a power supply 1004

Optionally identify which energy storage modules may be used to provide the output voltage 1006

Optionally select one or more of the energy storage modules to be used as standby energy module(s) 1008

Obtain a first order of energy storage modules for a cycle 1010

Obtain or compute a first percentage of a cycle duration that each energy storage module is to be turned on during the cycle based on the output voltage setting of the power supply, the first order and/or module voltage(s) 1012

Perform operations to turn on the energy storage modules in accordance with their respective first percentages of cycle 1014

Obtain a different second order of the energy storage modules 1016

Obtain or compute a different second percentage of a cycle duration for each energy storage module that is to be turned on during a next cycle 1018

Perform operations to turn on the energy storage modules in accordance with their respective second percentages of cycle duration 1020

End or perform other operations (e.g., return to 1004) 1022

# FIG. 10

1100

Begin 1102

Optionally select a standby energy module 1104

Obtain first order for energy storage modules that is associated with a cycle 1106

Determine a total number of the energy storage modules that are to be in the energy mode during the cycle 1108

Determine how long each energy storage module is to be in the energy mode during the cycle 1110

Control operations of the energy storage modules during the cycle in accordance with the first order and the determinations made in 1108 and 1110 1112

Obtain a second order different than the first order 1114

Determine a total number of the energy storage modules that are to be in the energy mode during a next cycle 1116

Determine how long each energy storage module is to be in the energy mode during the next cycle 1118

Control operations of the energy storage modules during a next cycle in accordance with the second order and the determinations made in 1116 and 1118 1120

Optionally override a standby energy mode of operation when an output voltage setting for the energy supply changes 1122

Optionally periodically check a state of charge for each of the energy storage modules 1124

Optionally select another energy storage module to be the standby energy module based on the state of charges of the energy storage modules 1126

End or perform other operations 1128

# FIG. 11

Rotating Order 1

[1, 2, 3, 4] [2, 3, 4, 1] [3, 4, 1, 2] [4, 1, 2, 3] [1, 2, 3, 4] [2, 3, 4, 1] [3, 4, 1, 2] [4, 1, 2, 3]

Rotating Order 2

[1, 2, 3, 4] [4, 1, 2, 3] [3, 4, 1, 2] [2, 3, 4, 1] [1, 2, 3, 4] [4, 1, 2, 3] [3, 4, 1, 2] [2, 3, 4, 1]

FIG. 12

## Example of modulating the output voltage

# FIG. 13

FIG. 14

# Example of modulating the output voltage

case: desired output voltage is 50 V in cycle C + 2: 2 modules on, 2 modules off, none is doing PWM

# FIG. 15

Europäisches
Patentamt

European
Patent Office

Office européen
des brevets

# EUROPEAN SEARCH REPORT

**Application Number**

EP 24 16 7211

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/016562 A1 (MAARBJERG ANDERS EGGERT [DK] ET AL) 19 January 2023 (2023-01-19) * paragraphs [0043], [0089] - [0147]; figures 1-4 * | 1-15 | INV. H02J7/00 H02M1/00 |
| X | US 2015/249351 A1 (WOLFF HANS-JOERG [DE] ET AL) 3 September 2015 (2015-09-03) * paragraphs [0005] - [0009], [0037] - [0047]; figures 1-8 * | 1-9,14, 15 | |

TECHNICAL FIELDS
SEARCHED      (IPC)

H02J
H02M

The present search report has been drawn up for all claims

| Place of search | Date of completion of the search | Examiner |
|---|---|---|
| Munich | 6 September 2024 | Telega, Pawel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 7211

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | Publication date | Patent family member(s) | | Publication date |
|---|---|---|---|---|
| US 2023016562 A1 | 19-01-2023 | CN | 114846716 A | 02-08-2022 |
| | | DK | 201970833 A1 | 28-07-2021 |
| | | EP | 4082092 A1 | 02-11-2022 |
| | | US | 2023016562 A1 | 19-01-2023 |
| | | WO | 2021129911 A1 | 01-07-2021 |
| US 2015249351 A1 | 03-09-2015 | CN | 104620491 A | 13-05-2015 |
| | | DE | 102012216158 A1 | 13-03-2014 |
| | | US | 2015249351 A1 | 03-09-2015 |
| | | WO | 2014040780 A2 | 20-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220037891
- US 20220247030
- US 20220359918
- US 20220360094